(19) **Europäisches Patentamt European Patent Office Office européen des brevets**

(11) **EP 1 573 611 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(21) Anmeldenummer: **02804906.2**

(22) Anmeldetag: **16.12.2002**

(51) Int Cl.:
***G06Q 30/00*** *(2006.01)*

(86) Internationale Anmeldenummer:
**PCT/EP2002/014348**

(87) Internationale Veröffentlichungsnummer:
**WO 2003/052648 (26.06.2003 Gazette 2003/26)**

(54) **SYSTEM UND VERFAHREN ZUR HERSTELLUNG EINES KUNDENINDIVIDUELLEN DRUCKERZEUGNISSES**

SYSTEM AND METHOD FOR PRODUCTION OF A PRINTED PRODUCT INDIVIDUALISED FOR THE CUSTOMER

SYSTEME ET PROCEDE D'OBTENTION D'UN PRODUIT IMPRIME INDIVIDUALISE POUR LA CLIENTELE

(84) Benannte Vertragsstaaten:
**AT BE BG CH CY CZ DE DK EE ES FI FR GB GR IE IT LI LU MC NL PT SE SI SK TR**

(30) Priorität: **15.12.2001 DE 10161684**

(43) Veröffentlichungstag der Anmeldung:
**14.09.2005 Patentblatt 2005/37**

(73) Patentinhaber:
• **Schoder, Detlef 56170 Bendorf (DE)**
• **Sick, Stefan 76531 Baden-Baden (DE)**

(72) Erfinder:
• **Schoder, Detlef 56170 Bendorf (DE)**
• **Sick, Stefan 76531 Baden-Baden (DE)**

(74) Vertreter: **Richardt, Markus Albert et al Leergasse 11 65343 Eltville am Rhein (DE)**

(56) Entgegenhaltungen:
**WO-A-00/75798        WO-A-00/79798 US-B1- 6 279 013**

**Beschreibung**

Die Erfindung betrifft ein System und Verfahren zur Herstellung eines kundenindividuellen Druckerzeugnisses basierend auf einem kundenindividuellen Interessenprofil.

In den 90er Jahren sind zahlreiche elektronische Zeitungen und Zeitschriften (z.B. HeadsUp, iNews) wie auch sogenannte Online-Clipping Dienstleistungen (Zusammenstellungen von Presseausschnitten) entstanden, welche es dem Leser ermöglichen, unter einer großen Zahl von Themenkategorien auszuwählen und seine eigene individuelle Zeitung oder Zeitschrift zu erstellen. Die individualisierte Online-Auflage kann dabei entweder über Fax/ Telekopie an ein Faxempfangsgerät oder über das Internet an den elektronischen Briefkasten des Kunden übermittelt werden. Populär ist auch das Abfragen/Anzeigen von dynamisch-individualisierten Webseiten.

Diese elektronischen Formen der Zeitungen bzw. Zeitschriften zeigen verschiedene Vorteile: Erstens die zeitliche Unmittelbarkeit, welche lediglich durch den von redaktioneller Seite zu leistenden Aufwand der Aktualisierung und Überarbeitung von Informationen begrenzt ist. Zweitens der einfache Zugang zu weiteren Informationsquellen z. B. mittels sogenannter Hyperlinks. Ferner durch die Möglichkeit für den, Kunden, während eines Online-Zuganges die Breite der Informationsrecherche im Dialog mit dem System zu variieren. Schließlich können diese Online-Zeitschriften und Zeitungen ein breiteres Spektrum an Datentypen wie z.B. Bewegtbild oder Animationen nutzen.

Allerdings zählt zu den Hauptnachteilen solcher elektronischer Medien, dass der Kunde im Besitz von moderner Hard- und Software, wie z. B. eines Personal Computers, eines Modems und einer Schnittstellensoftware sein muss und darüber hinaus über Kenntnisse im Umgang mit dieser Hard- und Software verfügen muss. Ferner muss sich zum einen der Kunde die Zeit für einen Online-Zugang und die Online-Auswahl nehmen, zum weiteren sind etwaige Ausdrucke auf Bürodruckern zuweilen umständlich, teuer und zeitaufwendig.

Bislang ist die Erstellung einer Online-Zeitung oder Zeitschrift beschränkt auf Online-Sitzungen des Kunden und das mögliche Druckformat des jeweiligen Bürodruckers. Der hierbei erhältliche Druck ist weder in Format noch Qualität mit dem klassischen Erscheinungsbild eines Massendruckerzeugnisses wie z.B. einer Zeitung vergleichbar.

Aus der WO 00 / 76204 A1 ist ein Dokumenten-Lieferungssystem zum automatischen Drucken eines Dokuments bekannt. Die Übertragung des Dokuments an den Drucker erfolgt über das Internet nach einem vorgegebenen Druck-Ablaufplan. Werbung kann in das Dokument nach einem Nutzerprofil eingefügt werden. Nachteilig bei diesem System ist, dass eine Rückmeldung des Nutzers hinsichtlich einer Anpassung des Interessenprofils nicht vorgesehen und auch nicht ermöglicht ist und dass ferner das Layout des Dokuments nicht automatisch erfolgt.

Aus der GB 2 357 877 A ist ferner ein Verfahren zur automatischen Formatierung von computergenerierten Dokumenten bekannt. Nachteilig hierbei ist, dass eine Auswahl von Dokumenten unter optimaler Nutzung des verfügbaren Platzes auf den Druckseiten (gezielt auch zum Füllen von Leerstellen) und eine Layout-Gestaltung aus in Inhalt, Form und Gestalt (z.B. Bild, Text und jeglicher Kombination dieser) unterschiedlichen Dokumenten nicht erfolgt.

Aus dem Patent US5,948,061 (Merriman et al.) ist die gezielte Werbung über Kommunikationsnetzwerke wie das Internet beschrieben. Die Auswahl der Werbung basiert auf dem Zugang des Kunden auf eine Webseite, welche verbunden ist mit einem Werbeprozess und nicht, wie in der hier vorliegenden Erfindung gezeigt, durch die Auswahl einer Themenkategorie. Das in US5,948,061 beschriebene System erfüllt nicht die typischen Anforderungen an Werbung über ein massengefertigtes Druckerzeugnis. So ist beispielsweise mit der Druckvorlage die Mischung aus Informations und Werbeinhalten. festgelegt, darüber hinaus bestehen technische Einschränkungen bezüglich des Layouts der Ausführung. Ferner erfolgt die Werbung wie auch die Rückmeldung des Kunden bei dem in US5,948,061 beschriebenen System innerhalb des TCP/IP- (Transmission Control Protocol/ Internet Protocol)- basierten Netzwerks.

Verglichen mit den vorgenannten Online- Zeitungen und Online-Zeitschriften sprechen folgende Argumente für das traditionelle Massendruckerzeugnis: Zunächst ist ein Massendruckerzeugnis wie eine klassische Zeitung oder Zeitschrift kongenial zu traditionellen Lesegewohnheiten. Teile der Zeitung können markiert oder herausgeschnitten werden, die optische Auflösung und Druckqualität sind standardisiert und das Format und die Faltung sind charakteristisch. Ferner wird keine Computer-Soft oder Hardware benötigt und das Druckerzeugnis kann an jeden Ort mitgenommen werden, ohne dass ein Drucker notwendig ist. Darüber hinaus sind keine sonderlichen Bedienungskenntnisse erforderlich.

Es ist einschlägig bekannt, dass die Einkünfte einer klassischen Zeitung oder Zeitschrift auf dem Verkaufspreis und meist zu einem wesentlichen Anteil auf Werbung beruhen. Bezüglich des Verhältnisses Werbung zu redaktionell aufbereiteter Information (im weiteren Kurz: "Information") werden verschiedene Zeitungen und Zeitschriften angeboten, wobei der Anteil an Werbung zwischen 0 (z.B. bei einigen wissenschaftlichen Zeitschriften) und prinzipiell 100% (Werbeblätter mit gebührenfreier Verteilung) sein kann. Kunden entscheiden sich durch Abonnement, im Zeitungs-/Zeitschriftengeschäft oder durch Annahme einer kostenfrei gelieferten Zeitung für ein nicht individualisiertes vorkonfiguriertes Produkt mit einer vorgegebenen Verteilung von Werbung und Information, ohne bei diesen klassischen Produkten unmittelbaren Einfluss auf Inhalt, Gestaltung und Preis nehmen zu können.

Werbung wird in Zeitungen und Zeitschriften an alle Leser in gleicher Weise weitergeleitet. Es gibt keine Auswahl von Zielkunden und Interessenten, was charakteristischerweise aufgrund von nicht zielgerichteter. Werbung zu schlechten Rücklaufquoten der Werbung führt. Nur Kenntnisse über die Positionierung einer Zeitung bzw. Zeitschrift im Medienmarkt und über die Präferenzen des durchschnittlichen Lesers der jeweiligen Zeitung oder Zeitschrift begrenzen das Risiko nicht zielgerichteter Werbung. Ansätze in Richtung Individualisierung beschränken sich auf regional angepasste Ausgaben (Sectioning) und Lesergruppen-spezifische Zeitungsbeigaben. Das Erfassen der potentiell schnell wechselnden Kundenwahrnehmung und -präferenz ist dabei schwierig und kostenintensiv.

Die Kundenindividualisierung von Druckerzeugnissen wird zum Beispiel anhand der Patente US5,114,291 (Hefty) und US5,213,461 (Kalisher) gezeigt, die die verschiedenen, auf computerbasierenden Layoutmethoden beschreiben, die dazu dienen, ein einzelnes kundenindividualisiertes Druckerzeugnis (z.B. Kinderbuch) herzustellen, indem sie vorgegebene nicht variable Textbausteine und variable Textelemente, welche individuell verändert werden können, verwenden. Chanenson et al. (US5,765,874) dehnt die Kundenindividualisierung auf einen Massenproduktionsprozess aus, indem vorgedruckte Papierdokumente mit freien Feldern für individuelle Textelemente verwendet werden. Keines dieser Patente schließt eine automatische Selektion aus einer großen Gruppe von unterschiedlichen und verschiedenartigen Textdokumenten und einer freien Kombination dieser Dokumente zu einem Endlayout ein. Dies ist erforderlich, wenn Kunden ihren Wünschen entsprechend unter verschiedenen Dokumenten auswählen wollen und diese gemäß ihren Vorgaben sortiert und in einem einzigen Dokument zusammengestellt werden sollen.

Ein Internet-gestütztes Designsystem für die kundenindividuelle Massenfertigung (mass customization) von Gütern wird im Patent WO00/60513 (Moritz) beschrieben. Das aufgeführte Designsystem findet vorzugsweise Anwendung bei der Produktion von Kopfbedeckungen. Die Kunden werden zu Designern ihrer eigenen Produkte und wählen im Internet zwischen verschiedenen Gestaltungsmöglichkeiten aus. Das System stellt den vom Kunden entworfenen Gegenstand dar und entwickelt eine spezielle Ausführungsanweisung für den Produktionsprozess. Eine andere Technologie für die kundenindividuelle Massenfertigung wird im Patent US6,085,165 (Ulwick) beschrieben und bezieht sich auf die kundenindividuelle Massenfertigung von elektronischen Geräten beispielsweise eines tragbaren Rundfunkempfängers oder eines Herzschrittmachers. Die Kunden (oder speziell bevollmächtigte Personen z.B. Ärzte) treffen selbst die Entscheidung über die individuell gewünschte Anpassung des elektronischen Gerätes.

Keines dieser Beispiele bezieht sich auf Druckmedien oder auf die besonderen Anforderungen der kundenindividuellen Massenfertigung von Druckerzeugnissen. In den obengenannten Patenten sind die Entscheidungen des Kunden Einmalentscheidungen oder, z. B. im Falle des Schrittmachers, bezogen auf die nach der Produktion oder nach dem Verkauf bestehende Veränderlichkeit eines technischen Produktes. Die genannten Systeme sind nicht in der Lage, aus dem Kundenverhalten bezüglich einer Sequenz von Kaufentscheidungen zu lernen. Es ist augenscheinlich, dass es für Druckerzeugnisse nach Produktion / nach Kauf keine Inhaltsvariabilität des gekauften Produktes selbst gibt Die Kunden könnten nur in der Zeit zwischen den Auflagen mit dem Produzenten von Druckerzeugnissen in Verbindung treten und auf die Gestaltung des Produktes Einfluss nehmen. Die mögliche Vielfalt der Inhalte ist groß und der sehr umfangreiche Bestand an möglichen Inhaltselementen (z. B. unterschiedliche Themen, unterschiedliche Quellen) innerhalb einer Rubrik wie z.B. Sport kann einem ständigen Wechsel (z.B. tägliche Anpassung) unterliegen. Darüber hinaus gewähren die vorgenannten Erfindungen keine Wahlmöglichkeiten bezüglich des Preises bzw. des Informationsangebots in Abhängigkeit eines variablen Zahlbetrages des Kunden.

Aus US 6,279,013 B1 ist eine interaktive Zeitung bekannt. Der Leser hat die Möglichkeit beispielsweise durch Ankreuzen bestimmter Felder auf der Zeitung Interessenschwerpunkte kund zu tun. Die Zeitung wird dann eingescannt, um die angekreuzten Felder zu lesen. Diese Information dient dann zur Anpassung des Nutzerinteressenprofils. Nachteilig ist bei dieser interaktiven Zeitung, dass der Nutzer nicht das Mischungsverhältnis von Werbung und Information wählen kann. Die einzelnen Zeitungsbeiträge werden in einem vorgegebenen Layout-Raster ohne Varianzmöglichkeit abgedruckt.

Es ist dem Fachmann auf diesem Gebiet bekannt, dass die Kosten einer traditionellen im Offsetdruck hergestellten Zeitung hauptsächlich in der Edition, dem Layout, der Produktion der Druckplatte, der Maschineneinstellung des Druckprozesses, dem Rohmaterial (Papier, Tinte) und in der Logistik entstehen. Der traditionelle Offsetdruck selbst kann auf Grund der sehr hohen Automation und der bei Großauflagen erheblichen "economies of scale" als untergeordneter Kostenfaktor betrachtet werden. Traditioneller Offsetdruck für Kleinstauflagen oder für den Extremfall für Auflagen der Losgröße 1 sind im Regelfall ökonomisch nicht sinnvoll realisierbar.

Allerdings hat die in den letzten Jahren aufkommende Digitaldruck-Technologie die Kosten u.a. für Layout, Maschineneinstellung und den Druck selbst stark reduziert und ermöglicht zunehmend im ökonomisch sinnvollen Rahmen die Auflagengröße von 1. Es ist das übergeordnete Ziel der vorliegenden Erfindung ein teilweise oder vollständig kundenindividuelles Massendruckerzeugnis hervorzubringen, welches in seiner prinzipiellen Ausführung kongenial zu traditionellen Lesegewohnheiten ist und zugleich die individuellen Entscheidungen der Kunden bezüglich Preis und Inhalt berücksichtigt. Daher ist das erste Ziel der Erfindung, ein kundenindividuelles Massendruckerzeugnis zu erstellen, bei dem das Verhältnis zwischen Werbung und gegebener Informationen mit dem Preis korreliert, den der Kunde bereit ist für die gegebenen Informationen zu bezahlen. Ein zweites Ziel ist, es dem Kunden durch einen Rückmeldemechanismus (Feedbackmechanismus) zu ermöglichen, direkten Einfluss auf den Inhalt seines individuellen Druckerzeugnisses zu nehmen. Ein drittes Ziel ist es, Werbung entsprechend der vom Kunden gewählten Themen und der aus verfügbaren Daten früherer Entscheidungen des betreffenden Kunden ermittelten Präferenzen zu gestalten. Darüber hinaus ist es das Ziel, Informationen über die Präferenzen des Einzelkunden zu sammeln und Verlage über das allgemeine Interesse der Leser bezüglich unterschiedlicher Themengebiete zu informieren.

Aus der WO 00/75798 A1 ist ein System zur automatischen Herstellung eines kundenindividuellen Druckerzeugnisses mit einer automatischen Layoutfunktion bekannt. Aus der US 6,279,013 B1 ist ein weiteres System zur Herstellung eines kundenindividuellen Druckerzeugnisses bekannt, bei dem der Kunde sein Interessenprofil mit Hilfe eines Scanners aktualisieren kann.

Das der Erfindung zu Grunde liegende Problem wird mit den Merkmalen der unabhängigen Patentansprüche jeweils gelöst. Bevorzugte Ausführungsformen der Erfindung sind in den abhängigen Patentansprüchen angegeben.

Die vorliegende Erfindung betrifft ein dynamisches System, welches einen durch die Kundenauswahl von Preis, Konfiguration und Inhalt eines Druckproduktes initiierten automatisierten Prozess ausführt. Das System wählt aus einem Block von Informationseinheiten, welche unterschiedlichen Themenkategorien und Unter-Kategorien zugeordnet werden können und beispielsweise Kurzzusammenfassungen von Presseartikeln, Presseausschnitte, Vollartikel, Bilder und Zeichnungen umfassen, die vom Kunden anhand der Kategorie bzw. Unterkategorie gewählten Einheiten aus und kombiniert diese mit Werbeeinheiten, welche zu den gleichen oder zu korrelierenden Kategorien zugeordnet werden können. Diese Werbeeinheiten werden von dem System automatisiert aus einem zweiten Block (Werbeeinheitenblock) ausgewählt.

Die Erfindung umfasst im Weiteren einen Rückmelde-Mechanismus (FeedbackMechanismus), welcher es dem Kunden ermöglicht, seine Themenauswahl zu verändern und /oder ergänzende Informationen für die nächste Druckauflage anzufordern. Das automatisierte System zeigt erfindungsgemäß ein auf die Rückmeldung des Kunden basierendes, die individuelle Kundenpräferenz betreffendes Lernverhalten und kann die initiale Auswahl des Kunden teilweise oder vollständig der aktuellen Präferenz anpassen.

Erfindungsgemäß bestimmt das automatisierte System den Gesamtumfang der in der kundenindividuellen Auflage wiedergegebenen Information und das Verhältnis zwischen Informations- und Werbeeinheiten gemäß einer vom Kunden gewählten Preiskategorie und einem die Kostenstruktur der Auflage beinhaltenden Preiskalkulationsmodell.

In der vorliegenden Erfindung erfolgt die Erstellung der Auflage unter Verwendung von Mitteln der automatisierten Layout-Anpassung. Das aus dem Gesamtprozess resultierende Layout wird in digitaler Form an eine Druckmaschine oder einen Drucker weitergeleitet, welcher in der Folge den Druck der individuellen Auflagen ausführt.

Da der Kunde erfindungsgemäß selbst über die Preiskategorie sowie den thematischen, qualitativen und quantitativen Inhalt seiner individuellen Auflage bestimmt und die Zusammenstellung von Inhalt und Werbung durch einen automatisierten Prozess erfolgt, wird auf den Prozess als "kundenindividueller automatisierter Erstellungsprozess von massengefertigten Druckprodukten" Bezug genommen.

Die vorliegende Erfindung erfüllt im Besonderen das spezifische Informationsbedürfnis des Kunden und ermöglicht die individuelle Preisgestaltung. Ferner ermöglicht sie dem Werbetreibenden die kundenspezifisch zielgerichtete Werbung und berücksichtigt die wirtschaftlichen Interessen des Verlegers bzw. Produzenten, welcher durch ein ausreichendes Maß an Werbung den zu erzielenden Deckungsbeitrag erreichen muss. Darüber hinaus gibt das System dem Verleger bzw. Produzenten aktuelle Informationen über die Informationsbedürfnisse des einzelnen Kunden sowie der Gesamtheit aller Kunden.

Die vorliegende Erfindung ist im besonderen Maße für eine kundenindividuelle Zeitung oder Zeitschrift (z.B. mit täglicher oder wöchentlicher Erscheinung) geeignet. Gründe hierfür sind die bei diesen Druckerzeugnissen erforderliche Verschiedenheit, Vielgestaltigkeit und Breite der Informationsangebote mit schnell wechselnden Inhalten, die potentiell große Häufigkeit der Kundenentscheidungsprozesse (z.B. täglich, wöchentlich) und die daraus resultierende Notwendigkeit eines raschen Lernverhalten des Systems bezüglich der Kundenpräferenz. Ferner hat bei diesen Druckerzeugnissen Werbung üblicherweise eine entscheidende Bedeutung für die Erzielung des Deckungsbeitrages, welches in dem erfindungsgemäßen System ebenfalls berücksichtigt wird.

Die Erfindung ermöglicht es, in einem vollautomatischen Prozess eine Druck-Datei zu generieren, um ein "kundenindividuell massengefertigtes" ("mass customized") Druckerzeugnis herzustellen und zwar unter Verwendung von Datenbank-Verwaltungssoftware und eines Kommunikationsnetzwerks für die automatische Selektion und Kombination von Informations- und Werbeeinheiten. Die ausgewählten Informations- und/oder Werbeeinheiten werden durch ein geeignetes computergestütztes Layout-Verfahren zu einem Druckerzeugnis zusammengestellt.

Diese erfindungsgemäß auf der Produktionsseite mittels Software ausgeführte Selektion und Erstellung von Inhalt wie Layout erfüllt unter Verwendung unterschiedlicher Algorithmen und Routinen verschiedene an das kundenindividuelle Produkt bzw. den Prozess gestellte Anforderungen, wie z.B. die freie Kaufpreisentscheidung des Kunden, die Berücksichtigung der bestehenden Kostenstruktur des individuellen Druckerzeugnisses und die Unterschiedlichkeit der Layouts der zur Verfügung stehenden Informations- und Werbeeinheiten. Ferner erfolgt über einen Rückmeldemechanismus und über einen auf der erfindungsgemäßen Software basierenden kundenspezifischen Inhaltsgewichtungsprozess die kundenindividuelle Erstellung des Druckerzeugnisses. Wie das klassische massengefertigte Druckprodukt ist das "kundenindividuell massengefertigte" (mass customized) Druckerzeugnis mit der Effizienz einer Massenproduktion hergestellt, im Gegensatz zu diesem ist es aber in einem oder einer Mehrzahl von Kriterien wie u.a. Inhalt, Quantität und Preis individualisiert und kundenspezifisch.

Nach einer bevorzugten Ausführungsform der Erfindung wird ein computergestütztes System verwendet, welches mindestens einen "Server" oder eine "Server-Engine" (SE) beinhaltet. Diese SE stellt mindestens zwei unterschiedliche Arten von Datenbanken bereit bzw. dient zur Herstellung bzw. Unterhaltung des Zugangs zu diesen Datenbanken.

Eine erste Art von Datenbanken beinhaltet Dateien, welche den Inhalt eines Druckerzeugnisses liefern und Text- und Bilddokumente wie z.B. Kurzfassungen, Zeitungsausschnitte, Artikel und Zeichnungen umfassen. Beim Kopieren einer solchen Datei können zum einen Ausgaben (z.B. Zahlungen an den Autor oder den Herausgeber des Dokumentes) oder auch Einnahmen (z.B. für Werbung) entstehen. Vorzugsweise umfasst das System eine Datenbank für die kostenerzeugenden "Informationseinheiten" und eine zweite für die zu Einnahmen führenden "Werbeeinheiten".

Eine zweite Art von Datenbanken enthält Informationen zum Selektionsprofil. Diese Datenbanken enthalten erfindungsgemäß üblicherweise historische Informationen zu Kundenaufträgen (Kundendatenbank) und /oder Informationen zu neuen Aufträgen (z.B. Themenkategorien und Preise in einer Auftragsdatenbank) und/oder Kostenrechnungsinformationen (z.B. Herstellkosten, zu erzielender Deckungsbeitrag).

Darüber hinaus umfasst das System eine Pluralität von Kunden (z.B. Leser) und Lieferanten (z.B. Autoren von Artikeln, Herausgeber, Nachrichtenagenturen).

Die Lieferanten können mit der SE über einschlägig bekannte elektronische Kommunikationssysteme verbunden sein, interagieren und mit der SE Informationen austauschen. Die Kommunikation kann erfindungsgemäß Mitteilungen über das Internet oder mittels LAN (Local Area Network) oder WAN (Wide Area Network) oder das Senden von EMails einschließen. Die hierbei verwendeten Sprachen können HTML, XML oder jede andere anwendbare Kommunikationssprache/jedes andere Protokoll einschließen.

Kunden können mit der SE des Systems interagieren und Aufträge/ Anweisungen durch jede Form der obengenannten elektronischen Kommunikationssysteme oder mit Hilfe eines einschlägig bekannten Telekommunikationsgerätes (z.B. Telefon, Fax, PDA, Funkgerät) übermitteln. Sie können einschlägig bekannte Arten der Informationsübermittlung wie z.B. Stimme, Schrift (Senden von Faxen), akustische Tastensignale, elektronische Tastensignale, SMS, elektronische, Radiofrequenz-, Infrarot- oder UltraschallSignale oder jedwede Kombination dieser Möglichkeiten verwenden.

Für jede "Inhaltsdatei" generiert entweder der Verleger oder das System - indem es beim Herunterladen von der Ursprungsdatenbank (Quelldatenbank) eine einschlägig bekannte Art der Schlüsselwort-Analyse ("keyword analysis") betreibt - durch ein Kodiersystem eine einzigartige und vorzugsweise dauerhafte ID-Kodierung, bevor die Datei in eine der oben genannten "Inhalts-Datenbanken" abgespeichert wird.

Durch das ID-Kodiersystem kann die SE sowohl Ähnlichkeiten von Dateien innerhalb einer Datenbank, als auch von Dateien, die in unterschiedlichen Datenbanken gespeichert sind, wie auch deren Zugehörigkeit zu einer speziellen Themenkategorie erkennen. Darüber hinaus beinhaltet der ID-Kode relevante Kostenrechnungsinformationen (anfallende Ausgaben sowie entstehende Einnahmen beim Kopieren einer Datei). Ferner kann sie relevante Informationen bezüglich des Layouts des Inhalts (Form und Größe des Dokumentenlayouts), ein einzigartiges Identifizierungskennzeichen, welches es ermöglicht, die einzelne Datei und /oder Ihre Ursprungsquelle zu identifizieren und jedes andere Kriterium beinhalten, welches von Bedeutung sein kann, die einzelne Datei zu identifizieren und den Auswahlprozess unter Verwendung weiterer Attribute anzupassen.

In einer bevorzugten Ausführungsform haben Dateien/Dokumente, die in einer der Inhaltsdatenbanken gespeichert sind, ein standardisiertes grafisches Layoutformat, bei dem z.B. Artikel und Bilder eine endliche Zahl von vorgegebenen Formen und Größen haben. Dies kann zum einen dadurch erreicht werden, dass der Autor oder Erstherausgeber des Artikels das Dokument in einem der bevorzugten Formate erstellt, zum anderen dadurch, dass die SE das Ursprungsdokument in ein leeres Dokument kopiert und dadurch anpasst, dass die Kopie des Inhalts in einen Rahmen bevorzugter Größe erfolgt.

Die Erfindung kann sowohl Kurzzeit- wie auch Langzeit- Kundenpräferenzen bei der Auswahl von "Informationen" und entsprechender "Werbung" berücksichtigen. Eine Unterroutine, welche einen Algorithmus beinhaltet, erzeugt aus Langzeit- (historische Auftragsdaten des betreffenden Kunden) und Kurzzeitpräferenzen (Orderdaten) durch eine Gewichtungsfunktion eine Rangfolge der Kategorien.

Diese Gewichtungsfunktion kann erfindungsgemäß üblicherweise statisch oder vorzugsweise dynamisch an das Präferenzwechselverhalten des Kunden angepasst sein. In einer bevorzugten Ausführungsform wird ein Korrekturfaktor aus der Analyse von Ähnlichkeiten zwischen hintereinander folgenden historischen Bestellungen des relevanten Kunden erstellt.

Durch die Einbeziehung von historischen Daten können Kunden nicht nur ein völlig neues Profil für Ihr Druckerzeugnis wählen, sondern auch nur die vorhergehende Selektion durch Wahl eines Themengebietes, zu dem sie mehr Informationen erhalten möchten, modifizieren. In diesem Fall wird die Rangfolge im Vergleich zu früheren Rangfolgen unter Einbeziehung einer höheren Gewichtung für das betreffende Themengebiet geändert. Es ist daher augenscheinlich, dass das Absenden einer Bestellung bzw. die Auswahl eines Themengebietes einen Feedback auf einen oder mehrere frühere individualisierte Auflagen darstellt.

Nachdem die Unterroutine die Rangfolge erzeugt hat, liest die SE den ID-Kode der Dateien und speichert sowohl die Anzahl wie die anfallenden Kopierkosten oder entstehenden Einnahmen aller vorkommenden neuen Dateien, die zur ausgewählten Kategorie gehören. "Neu" in diesem Zusammenhang bedeutet, dass diese Dokumentendateien für den betreffenden Kunden weder kopiert noch an ihn bereits versandt wurden.

Eine zweite Unterroutine, welche einen Algorithmus beinhaltet, erzeugt aus dem gewählten Preis und aus Kostenrechnungsdaten (Fertigungskosten, angestrebter Deckungsbeitrag) ein Mindestverhältnis (Einnahmen zu Ausgaben), berechnet die Summe aller Ausgaben für die Dokumente und ermittelt einen Mindestwert für die Einnahmen. Ein Algorithmus erzeugt eine Sequenz von ID-Kodes derjenigen Dateien, die Einnahmen generieren, in einer Weise, dass in der Gesamtheit dieser Mindestwert erfüllt wird. Als Ergebnis wird ein Satz von ID-Kodes der Ausgaben wie Einnahmen hervorrufenden Dateien in der Weise erzeugt, dass der gewählte Preis unter Berücksichtigung der Kostenrechnung eingehalten werden kann.

Um das Enddokument des individualisierten Druckproduktes zu erstellen, liest die SE die ausgewählten Dateien und kopiert - unter zuvor festgelegten Kombinationsregeln - den Inhalt der Dokumente in eine Sammlung definierter Seitenlayouts.

In einer bevorzugten Ausführungsform wird eine endliche Zahl definierter Seitenlayouts, in welche Rahmen vordefinierter Größe und Form kombiniert sind, in einer Layoutdatenbank gespeichert. Diese Seitenlayoutdokumente tragen eine ID-Kodierung, die es der SE ermöglicht, die Kombinationen von Rahmenform und Größe, welche im Seitenlayout verwendet sind, zu erkennen. Der verwendete Seitenlayout-ID-Schlüssel ist eine Kombination aus Layoutkodierungsfragmenten oder Abschnitten der Inhaltsdateien-ID-Kodierung.

Um Inhaltsdateien, die zur selben Themenkategorie gehören, unter der gleichen Rubrik (z.B. Wirtschaft, Fußball) im Enddruckerzeugnis zu gruppieren, kann die SE in einer bevorzugten Ausführungsform einer Gruppierungsroutine folgen, indem sie den Themenzuordnungsabschnitt des ID- Kodes der Inhaltsdateien verwendet

Hierauf wählt die SE für jede Untergruppe (die zur selben Rubrik gehört) passende Seitenlayoutdokumente aus, kopiert diese Dokumente in eine Datenbank, in welcher die Dateien für das Enddruckprodukt gespeichert werden. Dann liest die SE die ausgewählten Inhaltsdateien und kopiert den Inhalt in den definierten und zugeordneten Rahmen im Seitenlayoutdokument.

Es ist erkennbar, dass Kombinationen von Inhaltsdateien auftreten können, bei der Seiten nicht vollständig gefüllt werden können und Rahmen leer bleiben. Das System erkennt diese Abweichung durch den Vergleich der Anzahl von ID-Kodes der Inhaltsdateien mit allen Permutationen der ID-Kodes des Seitenlayouts, welche formuliert werden können. Die SE kopiert den Inhalt einer Datei aus einer Inhaltsdatenbank in den erkannten verbleibenden freien Rahmen. Diese Dokumente können z.B. aus einer Datenbank nicht spezifischer Werbeinhalte (z.B. Eigenwerbung für das Druckprodukt) entnommen werden.

In einer bevorzugten Ausführungsform wird ein Barcode aus der ID-Kodierung des Dokumentes erzeugt. Der Barcode kann direkt unter dem Artikel, am Ende jedes Abschnitts des Druckerzeugnisses oder an jedem anderem Platz des Druckerzeugnisses platziert sein.

Die Barcodes können verschiedene Selektionsebenen umfassen, welche es dem Kunden ermöglichen, die gewünschte Informationstiefe (z.B. Informationen bezogen auf einzelne Artikel, zu einem Thema oder Rubrik) zu variieren. Ferner können Wahlmöglichkeiten für Artikelserien (Follow-ups) oder alternative Inhalte angeboten werden.

Der vorgenannte, vom Kunden verwendete Feedbackmechanismus kann Möglichkeiten zur Einstufung und Bewertung der ausgewählten.Themengebiete entsprechend der individuellen Bedeutung und Nützlichkeit für den Kunden beinhalten.

Die Erfindung umfasst vollständig wie teilweise kundenindividualisierte Produkte. Vollständig kundenindividualisierte Produkte erfordern vom Kunden Kenntnisse über die verfügbare Information und den persönlichen Nutzen des einzelnen Themengebietes, welches implizit zur Floge hat, dass für ein zu 100% kundenindividualisiertes Produkt der Impuls des Kunden sich für ein neues Themengebiet zu entscheiden, entweder auf externe Informationsquellen (z.B. andere Zeitungen, Radio, TV) oder auf den Inhalt von früher ausgewählten Beiträgen bzw. Artikeln beruht. Um Vielfalt anzuregen, kann das Druckerzeugnis in variablen Anteilen nicht individuell ausgewählte Inhalte wie z.B. zufällig ausgewählte Informationen, Schlagzeilen, häufig nachgefragte Informationen oder best bewertete Artikel oder Geschichten beinhalten und/oder explizit für kommende Ausgaben zur Auswahl anbieten.

Ferner schließt die Erfindung die Möglichkeit ein, für ein solches Produkt Informationen zu beinhalten, die einen Bezug zum Aufenthaltsort des Nutzers haben (z.B. Lokalnachrichten), wobei die einschlägig bekannten Methoden der Lokalisierungstechnologien in Kommunikationsnetzwerken verwendet werden.

Da der Prozess zwischen der Auswahl der Themengebiete durch den Kunden bis zum Druck des individuellen Druckerzeugnisses automatisiert ohne Zutun Dritter abläuft, vollzieht das System einen "kundenindividuellen automatisierten Erstellungsprozess".

Bei Verwendung einschlägig bekannter Software zur statistischen Datenanalyse bietet die existierende Kundendatenbank mit kundenindividuellen Auswahldaten der Themengebiete Möglichkeiten, Tendenzen in der Entwicklung von Kundenpräferenzen darzustellen. Darüber hinaus signalisiert es den Verlegern und Autoren Nachfrage nach speziellen Themengebieten.

Nach einer weiteren bevorzugten Ausführungsform wird eine maximale Seitenanzahl des kundenindividuellen Druckerzeugnisses vorgegeben. Beispielsweise wird die maximale Seitenanzahl so gewählt, dass die Versandkosten minimiert werden. Üblicherweise sind die Versandkosten gewichtsabhängig, das heißt, dass jedem Gewichtsbereich eine bestimmte pauschale Versandgebühr zugeordnet ist. Um mit einer minimalen Versandgebühr ein Druckerzeugnis maximalen Umfangs zu versenden, ist es also vorteilhaft, die maximale Seitenanzahl des Druckerzeugnisses so zu wählen, dass sich dessen Gewicht am oberen Ende eines Gewichtsbereichs der Versandgebühr bewegt.

Im Allgemeinen wird ein erfindungsgemäß hergestelltes kundenindividuelles Druckerzeugnis einen geringeren Seitenumfang haben als ein vergleichbares nicht kundenindividuelles Druckerzeugnis. So beinhaltet beispielsweise eine gemäß dem erfindungsgemäßen Verfahren hergestellte Tageszeitung nur die für den Leser relevanten Informationen, so dass die Seitenanzahl im Vergleich zu einer normalen Tageszeitung reduziert sein kann. Dabei kann davon ausgegangen werden, dass ein durchschnittlicher Leser einer Tageszeitung nur einen kleineren Anteil des Zeitungstextes tatsächlich liest. Die Gründe hierfür sind, dass ein großer Anteil der in einer üblichen Tageszeitung beinhalteten Informationen im Allgemeinen für einen durchschnittlichen Leser nicht von Interesse ist bzw. der Leser, da die zur Verfügung stehende Lesezeit begrenzt ist, eine Auswahl der für ihn am relevantesten erscheinenden Artikel treffen muss.

Wenn man also davon ausgeht, dass ein durchschnittlicher Leser nur einen geringeren Anteil des Zeitungstextes einer üblichen Tageszeitung tatsächlich liest, kann der textuelle Umfang einer erfindungsgemäß individualisierten Tageszeitung auf einen geringeren Anteil zum Beispiel auf 20 % des üblichen Umfangs einer Tageszeitung beschränkt werden. Die übrigen 80 %, die als "Informationsballast" vom Leser ohnehin nicht gelesen werden, da sie seinem Interessenprofil nicht entsprechen, werden also gar nicht erst gedruckt. Dadurch lassen sich wie oben beschrieben die Versandkosten optimieren. Ferner lassen sich die sonstigen Herstellkosten, insbesondere die Materialkosten (Papier, Druckfarben) reduzieren. Ein weiterer besonderer und wichtiger Vorteil ist, dass hierdurch dem Grundsatz präventiver Abfallvermeidung nachgekommen wird, das Altpapiervolumen reduziert wird und nachhaltig primäre Rohstoffe und Energie eingespart werden.

Nach einer weiteren bevorzugten Ausführungsform der Erfindung besteht eine Anbindung an ein Abrechnungssystem. Wird eine Werbungsdatei für ein kundenindividuelles Druckerzeugnis ausgewählt, so wird dies durch eine Datenbank für die Zwecke der Abrechnung gegenüber dem Werbeauftraggeber erfasst. Im Unterschied zum Stand der Technik besteht also die Möglichkeit, nicht pauschal für eine bestimmte Auflage eine Anzeige zu schalten, sondern zielgerichtet die Anzeige mit einer Interessenprofilangabe zu verknüpfen, so dass die Anzeige nur für bestimmte Kunden individuell ausgewählt wird. Die Kosten der Anzeige werden dann nach der Anzahl der kundenindividuellen Druckerzeugnisse, für welche die Anzeige ausgewählt worden ist, automatisch bemessen und abgerechnet.

Insgesamt hat die vorliegende Erfindung den Vorteil, dass die Arbeit eines Verlagshauses rationalisiert werden kann. Der gesamte Auswahlprozess von Inhalten und Werbung sowie das Layout erfolgen automatisiert und unter Berücksichtigung technischer wie ökonomischer Grundsätze. Das Verlagshaus kann sich also auf die inhaltliche Arbeit hinsichtlich der für die Auswahl zur Verfügung gestellten Informationsdateien konzentrieren.

Im Weiteren wird ein bevorzugtes Ausführungsbeispiel der Erfindung mit Bezugnahme auf die Zeichnungen näher erläutert. Es zeigen:

Figur 1      eine bevorzugte Ausführungsform eines erfindungsgemäßen Systems zur Herstellung eines kundenindividuellen Druckerzeugnisses

Figur 2      eine zweite Ausführungsform eines erfindungsgemäßen Systems zur Herstellung eines kundenindividuellen Druckerzeugnisses,

Figur 3      zwei bevorzugte Formate für Informationseinheiten zugeordneten Kennungen,

Figur 4      ein Verfahren zur Erzeugung einer Informationsdatenbank,

Figur 5      eine Menge von Layouts basierend auf unterschiedlichen Formaten einer Format-Menge,

Figur 6      ein Blockdiagramm eines Telekommunikationssystems zur Erfassung einer maschinenlesbaren Kennung von einem Druckerzeugnis und zur Übertragung einer entsprechenden Telekommunikations-Nachricht an die SE,

Figur 7 A-F      eine Darstellung einer bevorzugten Ausführungsform eines erfindungsgemäßen Verfahrens zur Herstellung eines kundenindividuellen Druckerzeugnisses,

Figur 8          eine Darstellung eines Flussdiagramms für das automatische Layout.

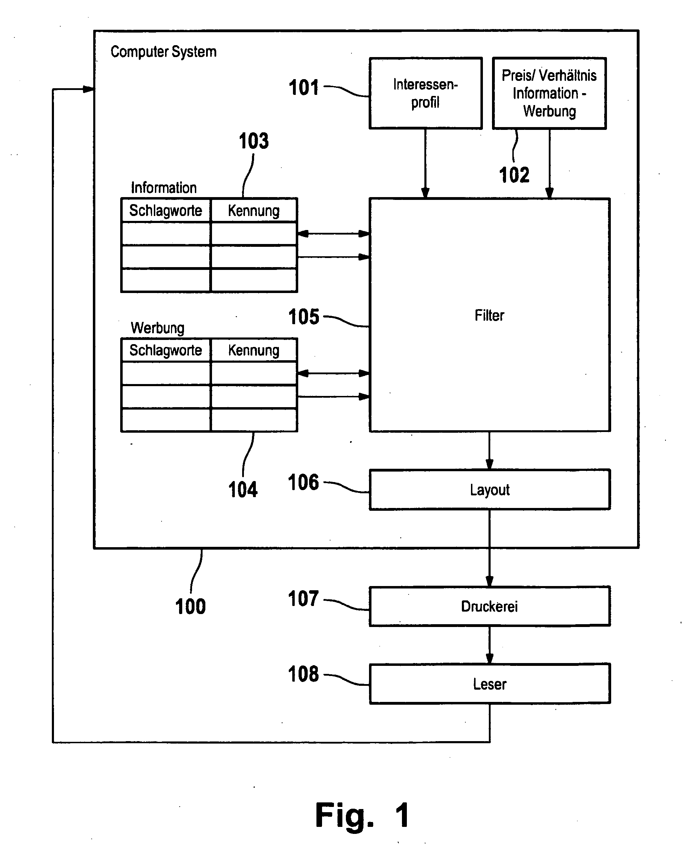

Die Figur 1 zeigt ein Blockdiagramm einer Ausführungsform eines erfindungsgemäßen Systems. Dieses beinhaltet ein Computersystem 100 mit einer Datenbank 101 zur Speicherung von kundenindividuellen Interessenprofilen und einer Datenbank 102 zur Speicherung von kundenindividuell ausgewählten Preisen bzw. zur Speicherung von kundenindividuellen Verhältnissen von Informationen zu Werbung.

Das Computersystem 100 beinhaltet ferner eine Datenbank 103 für den Zugriff auf Informationen und eine Datenbank 104 für den Zugriff auf Werbung.

Die Datenbank 103 beinhaltet für jede Informations-Datei, auf die über die Datenbank 103 zugegriffen werden kann, eine oder mehrere Schlagworte. Als "Information" wird hierbei jede Informationseinheit verstanden, die nicht Werbung ist, also zum Beispiel Berichte, Meinungen, Kommentare aller Art. Diese Informationen sind jeweils in einer Informationsdatei abgelegt. Jede der Informationsdateien wird mit einem oder mehreren Schlagworten indexiert und in der Datenbank 103 abgespeichert. Ferner ist in der Datenbank 103 jeder Informations-Datei eine Kennung zugeordnet. Die Kennung wird im Weiteren auch als ID- Kode bezeichnet.

Das Computersystem 100 beinhaltet ferner eine Datenbank 104 für den Zugriff auf Werbung bzw. Werbung beinhaltende Werbungs-Dateien. Jede einzelne Werbungs-Datei ist mit einem oder mehreren Schlagworten indexiert; ferner ist jeder Werbungs-Datei eine Kennung, das heißt, ein sogenannter ID-Kode, zugeordnet.

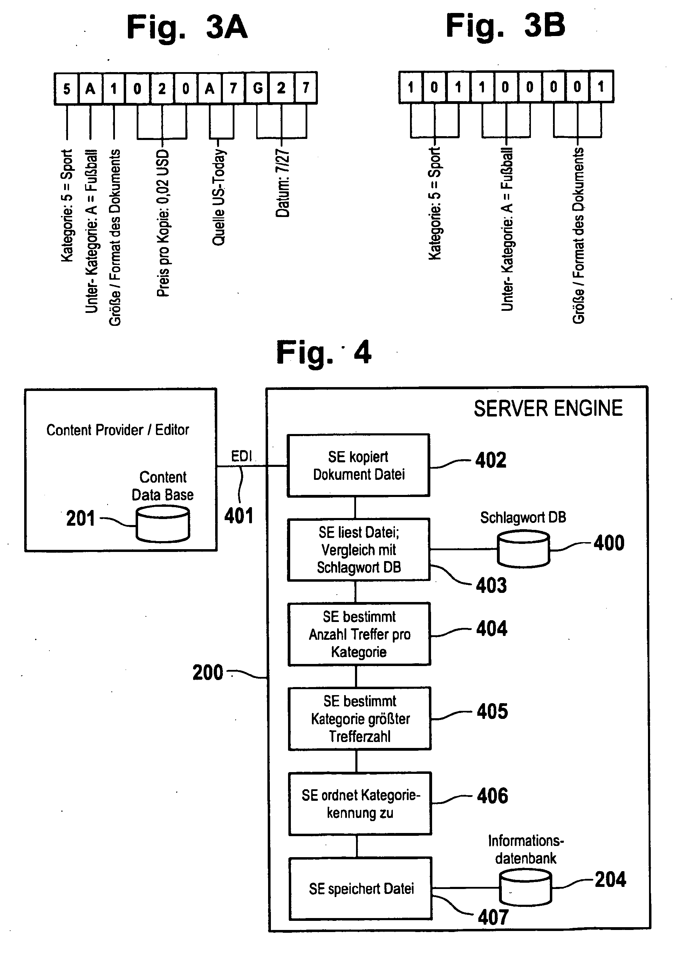

Die jeder Informations-Datei bzw. jeder Werbungs-Datei zugeordnete Kennung beinhaltet in kodierter Form verschiedene Informationen, wie zum Beispiel die thematische Zuordnung zu einer Kategorie, zum Beispiel, Politik, Wirtschaft, Feuilleton, Sport, Freizeit, Reise sowie entsprechender Unter-Kategorien. Darüber hinaus kann die Kennung in kodierter Form auch eine Information hinsichtlich der Größe und / oder des Formats der betreffenden Datei sowie hinsichtlich der Kosten bzw. der Einnahmen, der Quelle und des Erstellungsdatums beinhalten. Entsprechende Ausführungsbeispiele für Kennungen werden mit Bezugnahme auf die Figuren 3A und 3B näher erläutert.

Das Computersystem 100 beinhaltet ferner einen Filter 105. Zur Erzeugung eines Druckerzeugnisses für eine bestimmten Kunden greift der Filter 105 auf die Datenbanken 101 und 102 zu, um das Interessenprofil des betreffenden Kunden sowie dessen Preisvorgabe bzw. dessen kundenindividuell gewünschtes Verhältnis von Informationen zu Werbung abzufragen. Mit Hilfe des aus der Datenbank 101 ausgelesenen Interessenprofils wird in der Datenbank 103 eine Suche nach Informations-Dateien durchgeführt, die zu dem Interessenprofil passen. Hierzu wird in den Schlagworten gesucht

Wenn der Kunde bereit ist, einen besonders hohen Preis für das Druckerzeugnis zu bezahlen, wird als Gegenleistung auf das Einstreuen von Werbung gänzlich verzichtet.

Der Kunde kann jedoch auch einen geringeren Preis wählen oder auch die kostenlose Lieferung des Druckerzeugnisses. Je nach der Höhe des vom Kunden gewählten Preises bestimmt sich das Verhältnis von Informationen und Werbung. Die Werbung wird kundenindividuell aus der Datenbank 104 ermittelt. Hierzu werden Werbungs-Dateien mit zugeordneten Schlagworten ermittelt, die dem kundenindividuellen Interessenprofil möglichst gut entsprechen.

Die von dem Filter 105 auf diese Art und Weise ermittelten Informations-Dateien und gegebenenfalls Werbungs-Dateien werden dann von dem Filter 105 in das Layout-Modul 106 ausgegeben. Je nach Ausbildung des Layout-Moduls 106 kann es dazu ausreichend sein, die jeweiligen Formatangaben aus den Kennungen in das Layout-Modul 106 einzugeben.

Das Layout-Modul 106 wählt dann ein Layout aus einer vorgegebenen Menge von Layouts aus, wobei jedem Format-Feld in dem ausgewählten Layout möglichst eine der Informations- oder Werbungs- Dateien zugeordnet wird. Nachdem das Layout auf diese Art und Weise definiert worden ist, werden die entsprechenden Dateien in die Format-Felder des Layouts kopiert. Ferner wird für jede dieser Informations und Werbungs-Dateien eine maschinenlesbare Kennung generiert, die ebenfalls dem entsprechenden Format-Feld zugeordnet wird.

Nachdem das Layout auf diese Art und Weise definiert worden ist, wird von dem Computersystem 100 eine Druckdatei erzeugt, welche zu einer Druckerei 107 übertragen wird. Die Druckerei 107 verfügt vorzugsweise über ein digitales Drucksystem, welches Online mit dem Computersystem 100 zum Empfang der Druck-Datei verbunden ist.

In der Druckerei 107 wird dann das kundenindividuelle Druckerzeugnis durch Verarbeitung der Druck-Datei hergestellt Von dort wird das kundenindividuell hergestellte Druckerzeugnis dann an den Leser 108 geliefert.

Der Leser 108 hat die Möglichkeit der Rückkopplung an das Computersystem 100. Für diese Rückkopplung bestehen verschiedene technische Möglichkeiten:

- Die Rückkopplung erfolgt durch Verwendung eines Telekommunikationsgeräts, wie zum Beispiel eines Telefons. In diesem Fall bestehen die Kennungen in dem Druckerzeugnis aus numerischen oder alphanumerischen Codes, die der Nutzer zum Beispiel über die Tastatur seines Telekommunikationsgeräts eingibt, so dass die betreffenden Codes an das Computersystem 100 übertragen werden. Hierzu ruft der Leser zunächst eine bestimmte Service-Rufnummer an, um dann die betreffenden Codes manuell einzugeben. Bei den Codes kann es sich auch um Code-Wörter, wie zum Beispiel "Sport", "Wetter", ... oder dergleichen handeln. In diesem Fall ist die Spracheingabe der Code-Wörter durch den Leser nach dem Zustandekommen der Telefonverbindung vorteilhaft. In dem Computersystem 100 befindet sich dann ein Spracherkennungssystem, welches die natürlich sprachlich eingegebenen Worte erkennt und als Code-Worte für die Anpassung des Interessenprofils identifiziert.

- Bei den Kennungen des Druckerzeugnisses handelt es sich um unterschiedliche Telefonnummern. Um sein Interessenprofil anzupassen, ruft der Leser 108 eine oder mehrere dieser Telefonnummern an. Bei einem solchen Anruf wird die Telefonnummer des Lesers 108 mit übertragen - sogenannten Caller Line Identification (CLI). Ein solcher eingehender Anruf wird von dem Computersystem 100 registriert und aufgrund der Rufnummer des Lesers 108 dem Interessenprofil des Lesers 108 zugeordnet. Je nachdem welche Telefonnummer der Leser 108 angerufen hat, erfolgt die Anpassung des Nutzerinteressenprofils in dem Computersystem 100. Von Vorteil ist hierbei, dass eine Telefonverbindung nicht zustande kommen muss, was Telefongebühren spart. CLI kann auch bei der manuellen oder der Spracheingabe für die Leseridentifizierung und die Zuordnung der Eingabe zu einem Interessenprofil verwendet werden.

Ferner kann sich der Leser 108 eines Kunden-Lesegeräts bedienen, welches zum Lesen der maschinenlesbaren Kennungen dient. Durch selektives Einlesen von einer oder mehreren der maschinenlesbaren Kennungen des kundenindividuellen Druckerzeugnisses kann der Leser zum Ausdruck bringen, welche der Informationen oder der Werbung mehr oder weniger auf sein Interesse stößt. Die mittels des Kunden-Lesegeräts auf diese Art und Weise von dem Leser gesammelten-Informationen werden dann in Form einer Telekommunikations-Nachricht, beispielsweise über eine Telefonverbindung, in das Computersystem 100 eingegeben.

Aufgrund dieser Rückkopplung wird das in der Datenbank 101 gespeicherte Interessenprofil angepasst. Ein entsprechender Mechanismus ist auch für die Preisvorgabe bzw. das Verhältnis von Informationen zu Werbung möglich. Der Kunde muss dazu die entsprechende maschinenlesbare Kennung mit seinem Kunden-Lesegerät erfassen und diese Information als Rückkopplung an das Computersystem übertragen, so dass der Preis bzw. das Verhältnis von Information zu Werbung in der Datenbank 102 entsprechend angepasst wird.

Die maschinenlesbare Kennung, die jeder Information bzw. jeder Werbung des Druckerzeugnisses zugeordnet ist, kann beispielsweise basierend auf der jeweiligen Kennung in der Datenbank 103 bzw. 104 erzeugt werden, indem ein entsprechender Barcode in dem der Information bzw. der Werbung zugeordneten Format-Feld mit ausgedruckt wird. Der Leser kann dann zum Ausdruck bringen, dass ihn eine bestimmte Information oder Werbung besonders interessiert, indem er den Barcode mit einem Barcode-Lesegerät erfasst

Das Barcode-Lesegerät kann beispielsweise an einem Mobiltelefon angeschlossen sein. Der Leser baut dann eine Telefonverbindung mit dem Computersystem 100 durch Anwahl einer bestimmten Rufnummer auf. Bei diesem Vorgang wird die Telefonnummer des Mobiltelefons des Lesers mit übertragen, so dass der Leser basierend auf dieser Telefonnummer von dem Computersystem 100 identifiziert werden kann. Danach erfolgt dann die Übertragung der von dem Leser zuvor ausgewählten Kennungen. Alternativ können auch die Kennungen selbst den betreffenden Leser identifizieren.

Des Weiteren kann zusammen mit der Übertragung der Kennungen auch eine Information hinsichtlich des Aufenthaltsorts des Lesers mit übertragen werden. Die aktuelle geographische Position des Lesers kann dabei beispielsweise mit einem in das Mobiltelefon integrierten GPS-Modul (Global Positioning System) ermittelt werden. Die aktuelle Position des Lesers wird dann von dem Computersystem 100 bei der Auswahl von Informationen und /oder Werbung mit berücksichtigt. Beispielsweise kann das Interessenprofil in der Datenbank 101 des Lesers "lokale Informationen" beinhalten; das Computersystem 100 ist dann aufgrund der Übermittlung der aktuellen Position des Lesers 108 in der Lage, Informationen auszuwählen, die zu dem aktuellen Aufenthaltsort des Lesers 108 passen, sowie auch entsprechende Werbung, beispielsweise über Konzertveranstaltungen oder dergleichen.

Das System der Figur 1 ist also ein lernendes System, insofern es Rückkopplungen des Lesers 108 erlaubt, die zu einer entsprechenden Adaption der Auswahl von Informationen und Werbung dient. Um zu einem initialen Interessenprofil eines Lesers zu gelangen, von dem aus das System dann "lernt", bestehen verschiedene Möglichkeiten.

Eine der Möglichkeiten ist, dass der Leser sein Interessenprofil explizit angibt, beispielsweise durch Ankreuzen von bestimmten Rubriken auf einem Bestellschein. Eine andere Möglichkeit ist die, dass der Leser zunächst ein nicht individualisiertes Druckerzeugnis erhält. Der Leser wählt dann in diesem Druckerzeugnis einzelne Informationen und / oder Werbung durch Einlesen der entsprechenden maschinenlesbaren Kennungen.

Diese Auswahl des Lesers wird zu dem Computersystem 100 übertragen und statistisch ausgewertet Aus der Anzahl von ausgewählten Informationen oder Werbung aus einer bestimmten Rubrik oder zu einem bestimmten Themengebiet ergeben sich die Interessenschwerpunkte des Lesers und damit dessen Interessenprofil, welches in der Datenbank 101 abgespeichert wird. In einer nachfolgenden Ausgabe des Druckerzeugnisses wird dieses Interessenprofil dann berücksichtigt und der Leser erhält ein entsprechend individualisiertes Druckerzeugnis. Diese Individualisierung wird durch die Möglichkeit der Rückkopplung weiter verfeinert und der Fortentwicklung der Leserinteressen angepasst.

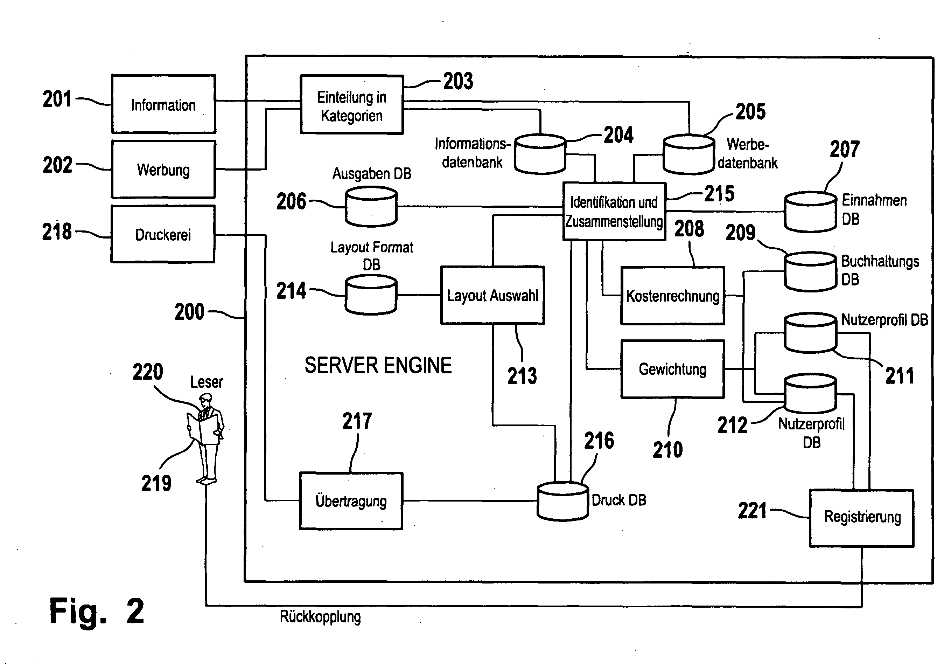

Die Figur 2 zeigt eine weitere bevorzugte Ausführungsform der Erfindung. Das System beinhaltet eine Server-Engine (SE) 200, welche dem Computersystem 100 der Figur 1 entspricht. Die Server-Engine 200 ist mit einer Datenbank 201 verbunden, welche Informations-Dateien beinhaltet.

Ferner ist die Server-Engine 200 mit einer Datenbank 202 verbunden, welche Werbungs-Dateien beinhaltet. Ferner können weitere Datenbanken 201 und 202 unterschiedlicher Anbieter von Informationen bzw. Auftraggebern für Werbung mit der Server-Engine 200 verbunden sein bzw. von der Server-Engine 200 abfragbar sein.

Die Server-Engine.200 beinhaltet ein Programm-Modul 203 zur Kategorisierung von Infonnations-Dateien und Werbungs-Dateien der Datenbanken 201 bzw. 202. Das Programm-Modul 203 dient zur Generierung einer Informationsdatenbank 204, die für jede der Informationsdateien, die von dem Programm-Modul 203 ausgewertet wurden, einen Eintrag beinhaltet. Dieser Eintrag enthält ein Feld zur Identifikation der Informations-Datei, die Angabe einer Kategorie, Schlagworte zur Beschreibung des Inhalts der Informations-Datei und eine Formatangabe.

Das Programm-Modul 203 dient ferner zur Generierung einer Werbedatenbank 205, die prinzipiell gleich aufgebaut ist wie die Informationsdatenbank 204 und an Stelle von Informations-Dateien auf Werbungs-Dateien verweist, welche von dem Programm-Modul 203 ausgewertet worden sind. Die Informationsdatenbank 204 und die Werbedatenbank 205 entsprechen also im Wesentlichen den Datenbanken 103 bzw. 104 der Figur 1.

Die Server-Engine 200 beinhaltet ferner einen Zugriff auf eine Ausgaben-Datenbank 206 und einer Einnahmen-Datenbank 207. Die Ausgaben-Datenbank 206 beinhaltet für jede Informationsdatei die für den Druck dieser Informationsdatei entstehenden Kosten, das heißt zum Beispiel Urheberrechtstantiemen. In der Einnahmen-Datenbank 207 befindet sich dagegen für jede Werbungs-Datei der Informationsdatenbank 204 eine Angabe der Werbeeinnahmen für den Abdruck der betreffenden Werbungs-Datei in dem kundenindividuellen Druckerzeugnis.

Die Server-Engine 200 beinhaltet ferner ein Programm-Modul 208 für die Kostenrechnung. Das Programm-Modul 208 ist mit einer Buchhaltungsdatenbank 209 verbunden, welche betriebswirtschaftliche Parameter beinhaltet, wie zum Beispiel die Kosten für den Druck und die Auslieferung eines einzelnen Exemplars des kundenindividuellen Druckerzeugnisses sowie der für ein einzelnes Exemplar angestrebte Deckungsbeitrag.

Die Server-Engine 200 beinhaltet ferner ein Programm-Modul 210, welches auf die Nutzerprofil-Datenbanken 211 und 212 zugreifen kann. In der Nutzerprofil-Datenbank 210 ist das Interessprofil des Nutzers gespeichert (vgl. Datenbank 101 der Figur 1), so wie es sich aus der zeitlichen Beobachtung des Leser Verhaltens, das heißt der Auswahl von bestimmten Informationen oder Werbung ergibt. Hierbei handelt es sich also um das Langzeitinteressenprofil des Lesers.

Die Nutzerprofil-Datenbank 212 dient dagegen zur Erfassung von kurzfristigen und aktuellen Interessen des Lesers. Beispielsweise hat der Leser die Möglichkeit zu einem bestimmten aktuellen Thema sein Interesse zu bekunden, so dass dieses besonders bei der Auswahl von Informationen zu berücksichtigen ist. Ferner wird in der Nutzerprofil-Datenbank 212 der aktuell von dem Leser akzeptierte Preis gespeichert.

Die Server-Engine 200 beinhaltet ferner ein Programm-Modul 213, welches mit einer Layout-Format-Datenbank 218 verbunden ist. Die Layout-Format-Datenbank 214 dient zur Speicherung einer Menge von Layouts basierend auf unterschiedlichen Formaten einer Format-Menge. Auf diese standardisierten Layouts kann das Programm-Modul 213 zugreifen. Das Programm-Modul 213 wählt dann aus den standardisierten Layouts ein Layout aus, welches auf die zu druckenden Informations-Dateien und Werbungs-Dateien passt, so dass möglichst jedes Format-Feld in dem gewählten Layout durch eine Informations-Datei oder eine Werbungs-Datei belegt ist.

Die Informationsdatenbank 204, die Werbedatenbank 205, die Ausgaben-Datenbank 206, die Einnahmen-Datenbank 207, das Programm-Modul 208, das Programm-Modul 210 und das Programm-Modul 213 sind mit einem Programm-Modul 215 verbunden. Das Programm-Modul 215 erhält von dem Programm-Modul 210 als Eingabeparameter das gewichtete Interessenprofil eines Lesers sowie auch den von dem Leser gewählten Preis. Basierend auf dem Interessenprofil identifiziert das Programm-Modul 215 in der Informationsdatenbank 204 relevante Informations-Dateien sowie gegebenenfalls auch für das Interessenprofil relevante Werbungs-Dateien.

Das Programm-Modul 215 wählt dann aus den so identifizierten Informations-Dateien und gegebenenfalls den Werbungsdateien diejenigen aus, so dass sich der vom Leser angegebene Preis realisieren lässt. Hierzu werden für die in Betracht kommenden Informations-Dateien und gegebenenfalls Werbe-Dateien die entsprechenden Ausgaben bzw. Einnahmen aus den Datenbanken 206 bzw. 207 ermittelt. Ferner wird der vorgegebene Deckungsbeitrag, der in der Buchhaltungsdatenbank 209 gespeichert ist sowie die Druckkosten und weitere Kosten aus dem Programm-Modul 208 berücksichtigt.

Die Informations-Dateien und gegebenenfalls die Werbungs-Dateien werden von dem Programm-Modul 215 also so gewählt, dass bei dem vom Kunden vorgegebenen Preis des kundenindividuellen Druckerzeugnisses der ebenfalls vorgegebene Deckungsbeitrag erreicht wird, wobei dies basierend auf den mit dem Druck der gewählten Informations-Dateien und gegebenenfalls Werbungs-Dateien im Zusammenhang stehenden Ausgaben und Einnahmen erfolgt.

Nach der Auswahl der Informations-Dateien und gegebenenfalls Werbungs-Dateien für das kundenindividuelle Druckerzeugnis wird das Programm-Modul 213 für die Auswahl des Layouts gestartet. Das Programm-Modul 213 sucht dann in der Layout-Format-Datenbank 214 nach einem standardisierten Layout, welches gut auf die zu druckenden Informations-Dateien und gegebenenfalls Werbungs-Dateien passt, das heißt, in welchem möglichst lückenlos alle Format-Felder durch Inforatations-Dateien und gegebenenfalls Werbungs-Dateien belegbar sind.

Nach der Layout-Auswahl in dem Programm-Modul 213 wird dann von dem Programm-Modul 215 eine Druck-Datei generiert, die in der Druck-Datenbank 216 abgespeichert wird. Diese Druckdatei wird dann über eine Schnittstelle 217 auf elektronischem Wege an eine Druckerei 218 übertragen und dort vorzugsweise mittels eines digitalen Drucksystems ausgedruckt. Dieses digitale Drucksystem kann unmittelbar mit der Schnittstelle 217 verbunden sein. Von der Druckerei218 erfolgt dann die Lieferung des kundenindividuellen Druckerzeugnisses, beispielsweise einer Zeitung 219 an den Leser 220.

Der Leser 220 hat die Möglichkeit mit dem Programm-Modul 221 der Server-Engine 200 zu kommunizieren. Das Programm-Modul 221 dient zur Registrierung des Lesers 220 und zur Eingabe von Daten in die Nutzerprofil-Datenbanken 211 und 212. Ferner hat der Leser 200 über das Programm-Modul 221 die Möglichkeit, eine Rückkopplung hinsichtlich seiner Interessen in die Server-Engine 200 einzugeben. Aufgrund der von dem Leser 220 getätigten Eingaben adaptiert das Programm-Modul 221 die Daten in den Nutzerprofil-Datenbanken 211 und 212.

Die Figur 3A zeigt ein Ausführungsbeispiel für den Aufbau einer Kennung für eine Informations-Datei oder eine Werbungs-Datei (vgl. Datenbanken 103 und 104 der Figur 1). Bei der Kennung handelt es sich um eine alphanumerische Kennung mit Datenfeldern zur Angabe einer Kategorie, Unter-Kategorie, der Größe und des Formats des Dokuments, des Preises pro Kopie der Quelle sowie des Erstellungsdatums.

In dem Beispielsfall der Figur 3A handelt es sich um die Kennung einer Informations-Datei der Kategorie 5, das heißt "Sport" und der Unter-Kategorie A, das heißt "Fußball". Die Größe und das Format des entsprechenden Dokuments ist mit der Ziffer "1" gekennzeichnet, welches einem bestimmten Format einer vorgegebenen Format-Menge entspricht. Ferner beinhaltet die Kennung eine Angabe von 0,02 US-Dollar als Urheberrechtsabgabe pro Kopie sowie die Zeitung "US-Today" als Quelle und den 27. Juli als Erstellungsdatum. Die beiden letztgenannten Informationen sind mit "A7" bzw. "G27" codiert.

Die Figur 3B zeigt ein alternatives Format für eine solche Kennung, welche rein numerisch aufgebaut ist. Die Kategorie 5, das heißt "Sport", ist als "101" codiert; die Unter-Kategorie A, das heißt "Fußball" als "100" und die Größe und das Format des Dokuments als "001", etc.

Die Figur 4 zeigt ein Verfahren zur Erzeugung einer Schlagwort-Datenbank 400 für die Informationsdatenbank 204 (vgl. Figur 2). Von einem sogenannten "Content Provider" oder "Editor" werden Informations-Dateien aus einer entsprechenden Datenbank 201 an die Server-Engine 200 geliefert. Dies erfolgt zum Beispiel über eine Telefonverbindung 401 in dem Standard "Electronic Data Interface" (EDI).

Aufgrund der von der Datenbank 201 gelieferten Daten erzeugt die Server-Engine 200 in dem Schritt 402 eine Dokument-Datei für jede gelieferte Informations-Datei. In dem Schritt 403 liest die Server-Engine 200 eine solche Dokument-Datei und vergleicht diese mit den Schlagworten in der Schlagwort-Datenbank 400. In dem Schritt 404 bestimmt die Server-Engine 200 die Anzahl von "Treffern" in der Dokument-Datei für die Schlagworte einer bestimmten Kategorie. Daraus bestimmt die Server-Engine 200 in dem Schritt 405 die Kategorie, deren Schlagworte die größte Trefferanzahl in der Dokument-Datei aufweisen.

In dem Schritt 406 ordnet die Server-Engine 200 der Dokument-Datei eine Kategorie-Kennung zu (vgl. Kategorie-Kennung für die. Kategorie "Sport" in den Kennungen der Figuren 3A und 3B).

In dem Schritt 407 speichert die Server-Engine 200 die Dokument-Datei zusammen mit der Kennung in der Informationsdatenbank 204.

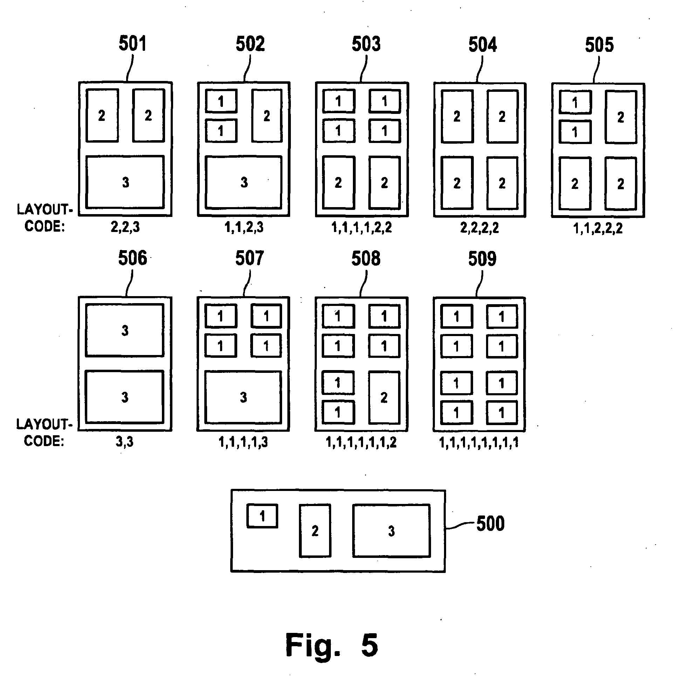

Die Figur 5 zeigt eine Menge von vorgegebenen Layouts, die in der Layout-Format-Datenbank 214 gespeichert sind. Jedes der Layouts setzt sich in dem hier betrachteten Beispielsfall aus den vorgegebenen Format-Feldern 1, 2 und / oder 3 der Format-Menge 500 zusammen. Die Menge von vorgegebenen Layouts beinhaltet dabei die Layouts 501 bis 509.

Beispielsweise beinhaltet das Layout 501 zwei Format-Felder "2" und ein Format-Feld "3". Dem Layout 505 ist entsprechend der Layout-Code "2,2,3" zugeordnet. Das Layout 502 beinhaltet dagegen zwei Format-Felder "1" und je ein Format-Feld "2" und "3". Daraus ergibt sich der Layout-Kode "1,1,2,3". Entsprechend verhält es sich für die weiteren vorgegebenen Layouts 503 bis 509.

In dem Ausführungsbeispiel der Figur 3 ist in jeder Kennung einer Informations-Datei oder einer Werbungs-Datei eine Angabe des für den Druck der entsprechenden Datei erforderlichen Format-Feldes, das heißt, eines Format-Feldes 1, 2 oder 3 vorhanden. Zur Layout-Auswahl (vgl. Programm-Modul 213 der Figur 2) wird für jede Seite des kundenindividuellen Druckerzeugnisses eines der standardisierten Layouts 501 bis 509 ausgewählt, so dass sich insgesamt eine möglichst lückenlose Belegung der Format-Felder auf den einzelnen Seiten durch Informations-Dateien oder Werbungs-Dateien ergibt.

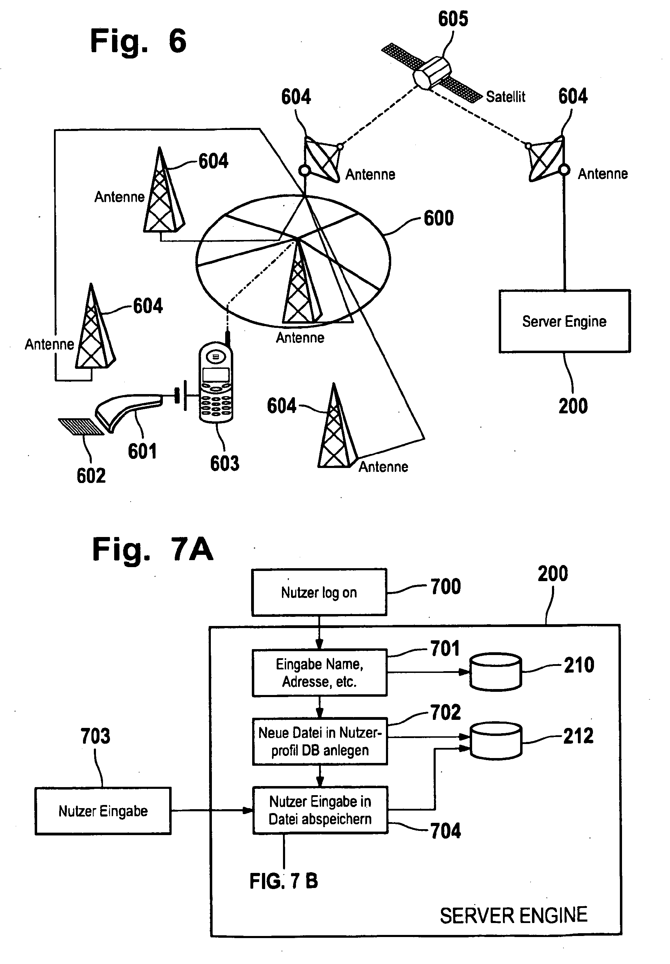

Die Figur 6 zeigt ein Telekommunikations-System, welches ein digitales Mobilfunknetz mit Mobilfunkzellen 600 beinhaltet. Der Leser (vgl. Leser 108 der Figur 1 und Leser 220 der Figur 2) ist im Besitz eines Kunden-Lesegeräts, beispielsweise eines Barcode-Scanners 601. Der Barcode-Scanner 601 dient zum Einlesen von maschinenlesbaren Kennungen 602, die auf dem kundenindividuellen Druckerzeugnis vorhanden sind.

Dabei ist für jede Information und für jede Werbung eine solche maschinenlesbare Kennung 602 vorhanden, die zumindest Informationen zur Identifikation der betreffenden Information oder Werbung beinhaltet. Eine solche maschinenlesbare Kennung 206 kann dabei innerhalb desselben Format-Felds abgedruckt werden, in dem auch die entsprechende Information oder Werbung gedruckt wird oder in einem dem betreffenden Format-Feld unmittelbar zugeordneten Randbereich.

Es können auch mehrere solche maschinenlesbare Kennungen 602 für jedes Format-Feld vorgesehen sein, um beispielsweise dem Benutzer die Möglichkeit einer besseren Präzisierung seiner Wünsche zu geben. Beispielsweise können zwei maschinenlesbare Kennungen 602 für jedes Format-Feld vorhanden sein, etwa um zum Ausdruck zu bringen, "diese Information interessiert mich" bzw. "diese Information interessiert mich ganz besonders". Ferner können auch weitere maschinenlesbare Kennungen 602 vorhanden sein, etwa um zum Ausdruck zu bringen, dass eine bestimmte Kategorie von Ereignissen aktuell von ganz besonderem Interesse ist sowie auch zur Änderung des Preises.

Zur Anpassung seines Interessenprofils bzw. zur Veränderung des vereinbarten Preises benutzt der Leser den Barcode-Scanner 601, um die entsprechenden maschinenlesbaren Kennungen 602 einzulesen. Beispielsweise kann der Leser eine maschinenlesbare Kennung 602 mit dem Barcode-Scanner 601 einlesen, um anzuzeigen, dass er in Zukunft einen bestimmten Preis bezahlen möchte. Beim Lesen des Druckerzeugnisses kann der Leser die maschinenlesbaren Kennungen 602 von ihn interessierenden bzw. ganz besonders interessierenden Artikeln oder auch von Werbung einscannen.

Der Barcode-Scanner 601 ist mit einem Mobiltelefon 603 verbindbar oder in dieses integriert. Über das Mobiletelefon 603 werden die von dem Leser mittels des Barcode-Scanners 601 erfassten maschinenlesbaren Kennungen über das digitale Mobilfunknetz über verschiedene Antennen 604 und erforderlichenfalls über einen Satellit 605 an die Server-Engine 200 (vgl. Figur 2) übertragen. Von der Server-Engine 200 werden die übertragenen Kennungen ausgewertet und das Interessenprofil bzw. der Preis entsprechend angepasst (vgl. Datenbanken 101 und 102 der Figur 1 sowie Nutzerprofil-Datenbanken 211 und 212 der Figur 2).

Ferner kann an die Server-Engine 200 auch eine Information betreffend der Mobilfunkzelle 600 des Mobiletelefons 603 übertragen werden. Durch GPS, COO (Cell of Origine) oder eine andere verfügbare Ortungstechnologie kann das Gerät beispielsweise geortet werden und eine Position ermittelt werden. Die an die Server Engine 200 übermittelte Information beinhaltet dann eine Positionsangabe des Lesers, welche es erlaubt, die aktuelle Position des Lesers in die Auswahl von Informationen und Werbung einfließen zu lassen. Information und Werbung (z.B. für lokale Veranstaltungen), die gezielt nur einen Leserkreis im einem geographisch eingrenzbaren Umfeld betreffen, können durch den Herausgeber bzw. Werbeauftraggeber mit einem Ortskode versehen werden. Durch die vorgenannte Positionsübermittlung werden die vom Leser beispielweise durch einscannen der maschinenlesbaren Kennung 602 ausgewählten und über das Mobilfunknetz übertragenen ID-Kodes automatisch mit einem weiteren Kode, dem Ortskode, ergänzt. Hierdurch wird eine automatische Auswahl von spezifisch mit anderen Ortskodes versehenen Informations- und Werbungseinheiten aus der Informationsdatenbank 204 oder den Werbedatenbanken 205 und 716 ausgeschlossen.

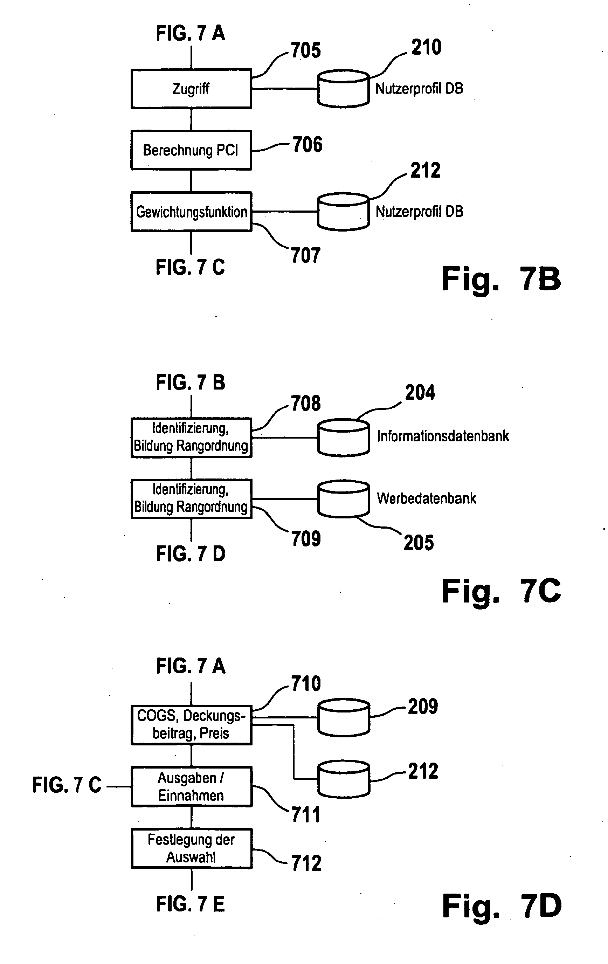

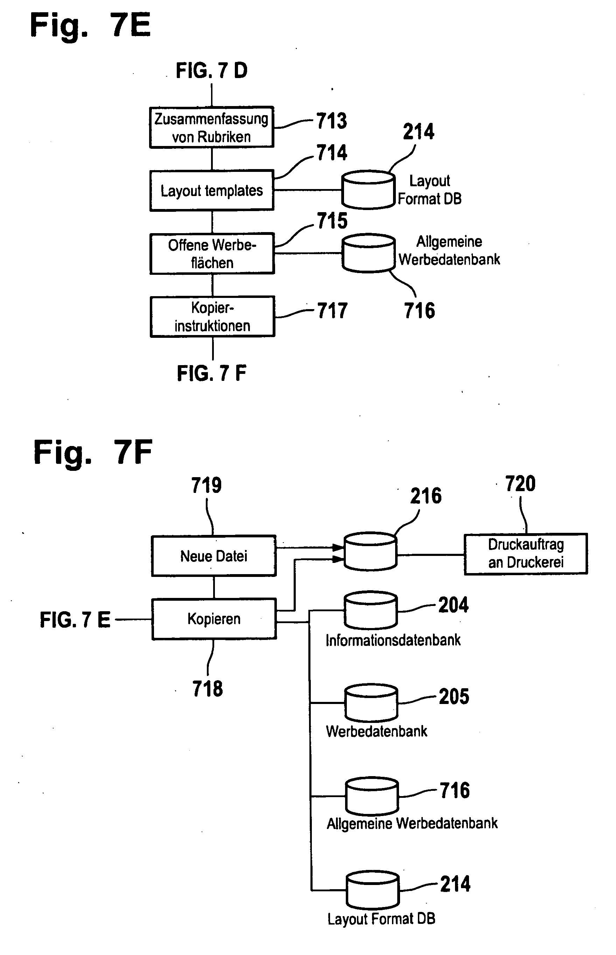

Die Figur 7 zeigt anhand eines weiteren bevorzugten Ausführungsbeispiels exemplarisch die Schritte von der Ersterfassung eines neuen Nutzers bis zur Auslieferung eines kundenindividualisierten Druckerzeugnisses. In dem Schritt 700 nimmt der Leser mit der Server-Engine 200 beispielsweise über sein Mobiltelefon Kontakt auf und gibt in dem Schritt 701 seinen Namen, Adresse und das Datum der ersten Lieferung ein. Alternativ kann der Leser auch ein entsprechendes Formular ausfüllen und per E-Mail, Fax oder per Post an den Betreiber der Server-Engine schicken. Diese Daten werden in der Nutzerprofil-Datenbank 210 (vgl. Figur 2) gespeichert. In dem Schritt 702 wird in der Nutzetprofil-Datenbank 212 eine neue Datei definiert. Diese beinhaltet zunächst nur den von dem Leser gewünschten Preis.

In dem Schritt 703 tätigt der Nutzer eine Eingabe, beispielsweise nachdem er ein erstes nicht individualisiertes Exemplar des Druckerzeugnisses erhalten hat und verschiedene maschinenlesbare Kennungen selektiv eingelesen hat (vgl. Figur 6). In dem Schritt 704 werden diese von dem Leser eingegebenen Daten seitens der Server-Engine 200 erfasst und in der Nutzerprofil-Datenbank 212 und / oder der Nutzerprofil-Datenbank 210 abgespeichert.

Nach dem Schritt 704 werden die Schritt 705, 706 und 707 zur Bestimmung einer Gewichtungsfunktion für die Interessenprofile ausgeführt.

In dem Schritt 705 erfolgt ein Zugriff der SE auf die Nutzerprofil-Datenbank 210. Basierend auf in der Nutzerprofil-Datenbank 210 gespeicherte Daten erfolgt in dem Schritt 706 die Berechnung des PCI ("Preference Change Index").

Für n>0 ergibt sich der PCI als

$$PCI = c * (1 - \frac{\sum_{i=1}^{n} \frac{T_i}{S_i}}{n})$$

Und für n=0 ist der PCI = 1, wobei

$T_i$: Anzahl der Ähnlichkeiten zwischen Kategorien von Kennungen eines jeden Paars von aufeinanderfolgenden Bestellungen bzw. Lieferungen des Druckerzeugnisses

$S_i$: Anzahl der gewählten Kategorien der früheren der beiden Bestellungen bzw. Lieferungen,

n: gesamte Anzahl von Paaren von aufeinanderfolgenden Bestellungen bzw. Lieferungen des Druckerzeugnisses,

c: Korrekturfaktor.

Der Korrekturfaktor "c" kann zum Beispiel als Funktion der Gesamtanzahl von Paaren beschrieben werden.

$$\text{für } n > 0: \quad c = 1 - \frac{1}{n}$$

Der PCI gibt die durchschnittliche Änderung verschiedener Bestellungen an und gewichtet diese Änderung durch die Anzahl der Bestellungen, die der Kunde getätigt hat.

In einem bevorzugten Ausführungsbeispiel beinhaltet die Gewichtungsfunktion den PCI und berechnet über einen Algorithmus den Gewichtungsfaktor für die ausgewählten Kategorien in einer spezifischen Reihenfolge, zum Beispiel

$$g(x) = \frac{e \exp( x * PCI )}{\sum_{X=1}^{z} e \exp( x * PCI )}$$

wobei

g(x): Gewichtungsfaktor für die gewählten Kategorien der Lieferung x

z: Bestellnummer der letzten Bestellung

e: Eulersche Zahl

PCI: "Preference Change Index"

Die Berechnung dieser Gewichtungsfunktion erfolgt in dem Schritt 707, wobei auf die Nutzerprofil-Datenbank 212 zugegriffen wird.

Zur Bildung einer Rangordnung von den Leser interessierenden Interessenkategorien für eine aktuelle Ausgabe x des Druckerzeugnisses wird also wie folgt vorgegangen:

1. Zunächst wird der PCI basierend auf dem Verhalten des Lesers in der Vergangenheit berechnet. Für jede Ausgabe des Druckerzeugnisses hat der Leser die Möglichkeit ein oder mehrere Kategorien auszuwählen und im Wege einer Rückkopplung dem System mitzuteilen, wie oben erläutert. Für die Ausgabe i des Druckerzeugnisses wählt der Leser eine Menge $M_i$ von Kategorien aus. Die Anzahl $T_i$ wird dann so bestimmt, dass die Mengen $M_{i-1}$ und $M_i$ miteinander verglichen werden: Aus der Anzahl der gleichen Elemente in $M_i$ und $M_{i-1}$ ergibt sich die Anzahl $T_i$. Die Anzahl $S_i$ ist gleich der Anzahl der Elemente der Menge $M_{i-1}$.

2. Dann werden für sämtliche vorausgegangenen Ausgaben des Druckerzeugnisses die Gewichtungsfaktoren g (1), g(2), nach der oben angegebenen Formel berechnet.

3. Für jede der Kategorien wird dann ein Gewichtungsfaktor $G_{Kategorie}$ berechnet, der sich aus der folgenden Formel ergibt :

$$G_{Kategorie} = \sum_{x=1}^{z} g(x) * Anzahl\_Elemente\_Kategorie\_Ausgabe\_x$$

wobei *Anzahl_Elemente_Kategorie_Ausgabe_x* die Anzahl von Auswahlen der Betreffenden Kategorie für eine bestimmte Ausgabe x des Druckerzeugnisses bezeichnet.

4. Die Informationen und gegebenenfalls die Werbung werden dann proportional zu den Gewichtungen G der einzelnen Interessenkategorien vom System automatisch ausgewält.

In die Gewichtungsfunktion geht also sowohl das langfristige Leserverhalten als auch das kurzfristige Leserverhalten ein, wobei bei der Verteilung der Gewichtung von langfristigem und kurzfristigem Leserverhalten der Lesertyp berücksichtigt wird, das heißt, ob der Leser historisch betrachtet seine Interessen häufig oder weniger häufig geändert hat Wenn sich beispielsweise ein Leser in der Vergangenheit konstant für eine bestimmte Kategorie interessiert hat, wie zum Beispiel "Sport" oder "Fußball", so bleibt eine relativ hohe Gewichtung dieser Kategorie oder Unter-Kategorie erhalten, auch wenn der Benutzer in der Nutzerprofil-Datenbank 212 eine aktuelle Anforderung von Informationen zu einer anderen Kategorie, zum Beispiel "Bundestagswahl" oder dergleichen eingibt.

Basierend auf der so gewonnenen Gewichtungsfunktion erfolgt dann in dem Schritt 708 eine Sortierung von relevanten Informations-Dateien der Informationsdatenbank 204 sowie in dem Schritt 709 eine Sortierung von relevanten Werbungs-Dateien der Werbedatenbank 205. Aus diesen entsprechend der Gewichtungsfunktion sortierten Listen wählt dann die Server-Engine Dateien aus, wobei die Auswahl von Informations-Dateien bis zu einem vorgegebenen maximalen Volumen erfolgt.

Die Figur 7D zeigt die Schritte 710, 711 und 712 für die endgültige Festlegung der Auswahl von Informations-Dateien und Werbungs-Dateien. Hierzu wird in dem Schritt 710 auf die Buchhaltungsdatenbank 209 und die Nutzerprofil-Datenbank 212 (vgl. Figur 2) zugegriffen. Aus der Buchhaltungsdatenbank 209 werden die betriebswirtschaftlichen Kennziffern "costs of goods sold" (COGS) und der Ziel-Deckungsbeitrag "target contribution margin" (CM) sowie der von dem Leser gewählte Preis ausgelesen. Basierend auf den Ergebnissen der Schritte der Figur 7C, das heißt, der sortierten Informations-Dateilisten und Werbungs-Dateilisten, erfolgt in dem Schritt 710 eine Analyse der Ausgaben bzw. der Einnahmen woraufhin in dem Schritt 712 eine endgültige Festlegung der Auswahl von Informations-Dateien und Werbungsdateien erfolgt.

In dem Schritt 713 werden zumindest die ausgewählten Informations-Dateien zu Rubriken zusammengefasst, das heißt, beispielsweise "Politik", "Internationales", "Wetter", "Feuilleton" oder "Sport". Für die rubrifizierten Informations-Dateien werden dann in dem Schritt 714 unter Zugriff auf die Layout-Format-Datenbank 214 standardisierte Layouts ausgewählt und die Informations-Dateien sowie die Werbungs-Dateien den Format-Feldern in dem ausgewählten Layout zugeordnet.

Falls dabei leere Format-Felder verbleiben, werden diese in dem Schritt 715 mit allgemeiner Werbung aus einer allgemeinen Werbedatenbank 716 gefüllt. In dem Schritt 717 erfolgt eine Erzeugung einer Kopierinstruktion, die die zu kopierenden Informations-Dateien und Werbungs-Dateien spezifiziert.

In dem Schritt 718 wird die Instruktion des Schritt 717 ausgeführt, nachdem in dem Schritt 719 eine neue Datei in der Druck-Datenbank 216 erzeugt worden ist. In dieser Datei werden die kopierten Informations-Dateien und Werbungs-Dateien zusammen mit den jeweils zugeordneten maschinenlesbaren Kennungen gespeichert, so dass hieraus ein Druckauftrag resultiert, der in dem Schritt 720 an eine Druckerei übertragen wird.

Das Kopieren der Dateien in dem Schritt 718 erfolgt durch Zugriff auf die betreffenden Dateien in der Informationsdatenbank 204, der Werbedatenbank 205, der allgemeinen Werbedatenbank 716 sowie der Layout-Format-Datenbank 214.

Vorzugsweise werden die Druckaufträge in der Druck-Datenbank 216 über einen bestimmten Zeitraum gesammelt, bevor sie an die Druckerei ausgegeben werden. Beispielsweise werden die Aufträge eines Tages gesammelt und dann etwa um 24.00 Uhr an die Druckerei übermittelt, so dass noch genug Zeit bleibt, die Druckaufträge abzuwickeln und zum Beispiel die Zeitungen am nächsten Morgen an die Kunden auszuliefern.

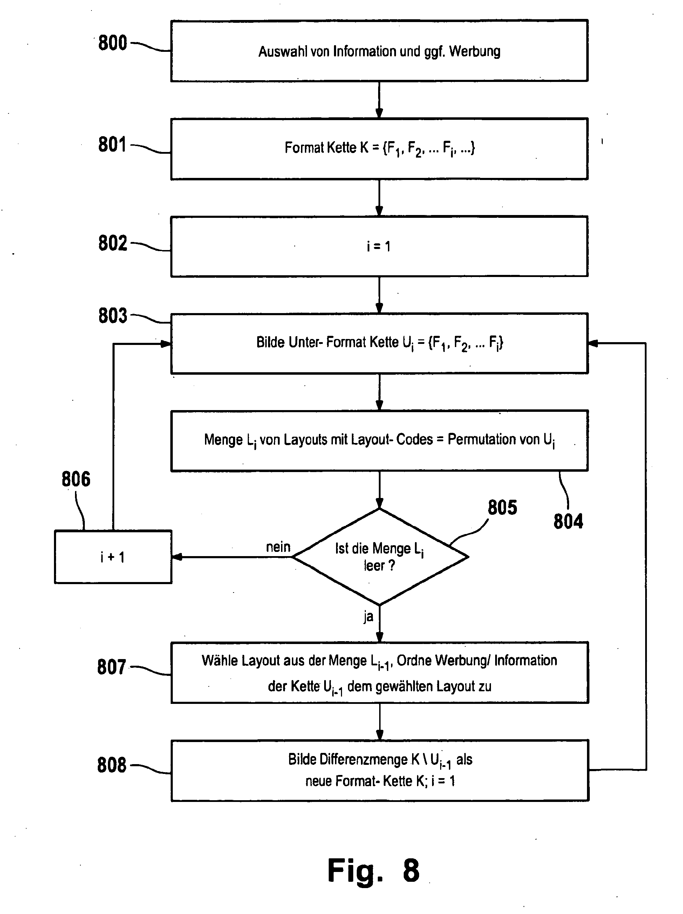

Mit Bezugnahme auf die Figur 8 wird im Weiteren eine Ausführungsform des erfindungsgemäßen automatischen Layout-Verfahrens näher erläutert. In dem Schritt 800 erfolgt die Auswahl von Informationen und gegebenenfalls Werbung für eine Ausgabe des Druckerzeugnisses und zwar kundenindividuell, wie oben erläutert. Jede der ausgewählten Informationen und gegebenenfalls der Werbung hat ein bestimmtes Format, welches in der der entsprechenden Datei zugeordneten Kennung codiert ist (vgl. Figur 3).

In dem Schritt 801 werden die Format-Codes der ausgewählten Informations- und gegebenenfalls Werbungs-Dateien zu einer Formatkette K zusammengefasst. In dem Schritt 802 wird der Index i gleich Eins gesetzt.

In dem Schritt 803 wird eine Unter-Formatkette $U_i$ gebildet. Für diese Unter-Formatkette $U_i$ wird in dem Schritt 804 die Menge $L_i$ von Layouts ermittelt, die einen Layout-Code haben, welcher eine Permutation der Format-Unterkette $U_i$ ist.

In dem Schritt 804 wird geprüft, ob die Menge $L_i$ leer ist. Wenn dies nicht der Fall ist, wird in dem Schritt 806 der Index i inkrementiert und die Unter-Formatkette $U_i$ um das nächste Element der Kette K erweitert. Daraufhin wird in dem Schritt 804 erneut die Menge $L_i$ für die erweiterte Kette $U_i$ ermittelt.

Ergibt die Prüfung in dem Schritt 805, dass die Menge $L_i$ leer ist, so wird danach der Schritt 807 ausgeführt. In dem Schritt 807 wird ein Layout aus der Menge $L_{i-1}$ ausgewählt. Falls die Menge $L_{i-1}$ mehr als ein Layout enthält, kann ein beliebiges Element der Menge $L_{i-1}$ ausgewählt werden. Die Information und gegebenenfalls die Werbung, die der Kette $U_{i-1}$ entspricht, wird dann dem gewählten Layout zugeordnet und die Formatfelder in dem gewählten Layout werden entsprechend durch diese Information und gegebenenfalls Werbung belegt.

In der Schritt 808 wird die Differenzmenge der Formatkette K und der Kette $U_{i-1}$ gebildet. Diese Differenzmenge wird als neue Formatkette K definiert. Ferner wird der Index i auf i=1 zurückgesetzt. Danach geht die Ablaufsteuerung zurück zu dem Schritt 803 um das Layout für die nächste Seite des Druckerzeugnisses auszuwählen und entsprechende Zuordnungen von Information und gegebenenfalls Werbung der verbleibenden Formatkette K vorzunehmen. Dieser Ablauf wird solange durchgeführt, bis die neue Formatkette K die leere Menge ist.

Alternativ wird dieser Ablauf dann abgebrochen, nachdem eine vorgegebene Anzahl von Seiten des Druckerzeugnisses auf diese Art und Weise generiert worden ist. Die Vorgabe einer maximalen Seitenzahl kann insbesondere hinsichtlich der Minimierung der Versandkosten und der Reduzierung des Altpapiervolumens vorteilhaft sein.

Das automatische Layout gemäß des Verfahrens der Figur 8 kann zu Folge haben, dass einzelne Formatfelder leer sind. Diese offenen Felder werden dann mit nicht kundenspezifischer allgemeiner Werbung gefüllt (vgl. Werbedatenbank 716 der Figur 7E).

Um die Anzahl der leeren Formatfelder zu begrenzen, ist es vorteilhaft, nach dem Schritt 807 zu prüfen, ob es in dem gewählten Layout offene Formatfelder gibt. Wenn dies der Fall ist, kann für die Elemente der Differenzmenge K \ $U_{i-1}$ geprüft werden, ob Format-Codes $F_i$ vorhanden sind, die dem offenen Formatfeld des gewählten Layouts entsprechen. Falls dies der Fall ist, kann das entsprechende Formatfeld gefüllt werden und die Differenzmenge wird um das Element, welches sich auf diese Art und Weise hat zuordnen lassen, verkleinert.

**Bezugszeichenliste**

| | |
|---|---|
| Computersystem | 100 |
| Datenbank | 101 |
| Datenbank | 102 |
| Datenbank | 103 |
| Datenbank | 104 |
| Filter | 105 |
| Layout-Modul | 106 |
| Druckerei | 107 |
| Leser | 108 |
| Semer-Engine (SE) | 200 |
| Datenbank | 201 |
| Datenbank | 202 |
| Programm-Modul | 203 |
| Informationsdatenbank | 204 |
| Werbedatenbank | 205 |
| Ausgaben-Datenbank | 206 |
| Einnahmen-Datenbank | 207 |
| Programm-Modul | 208 |
| Buchhaltungsdatenbank | 209 |
| Programm-Modul | 210 |
| Nutzerprofil-Datenbank | 211 |
| Nutzerprofil-Datenbank | 212 |
| Programm-Modul | 213 |
| Layout-Format-Datenbank | 214 |
| Programm-Modul | 215 |
| Druck-Datenbank | 216 |

| | |
|---|---|
| Schnittstelle | 217 |
| Druckerei | 218 |
| Zeitung | 219 |
| Leser | 220 |
| Programm-Modul | 221 |
| Schlagwort-Datenbank | 400 |
| Telefonverbindung | 401 |
| Format-Menge | 500 |
| Layout | 501 |
| Layout | 502 |
| Layout | 503 |
| Layout | 504 |
| Layout | 505 |
| Layout | 506 |
| Layout | 507 |
| Layout | 508 |
| Layout | 509 |
| Mobilfunkzelle | 600 |
| Barcode-Scanner | 601 |
| maschinenlesbare Kennung | 602 |
| Mobiltelefon | 603 |
| Werbedatenbank | 716 |

**Patentansprüche**

1.  System zur Herstellung eines kundenindividuellen Druckerzeugnisses mit einem Computersystem umfassend:

    - ersten Datenbankmitteln (101; 210, 211, 212) zur Speicherung eines kundenindividuellen Interessenprofils, wobei jedem Interessenprofil eine Kunden-Telefonnummer zugeordnet ist,
    - zweiten Datenbankmitteln (102; 206, 207, 208, 209, 212) zur Speicherung eines kundenindividuellen Verhältnisses von Information und Werbung in dem Druckerzeugnis,
    - Filtermitteln (105; 215) zur Auswahl von Informationen gemäß des kundenindividuellen Interessenprofils aus dritten Datenbankmitteln (103; 204) unter Berücksichtigung einer geographischen Position, wobei jeder Informations-Datei eine Kennung zugeordnet ist,
    - Filtermitteln (105; 215) zur Auswahl von Werbung gemäß dem kundenindividuellen Interessenprofils aus vierten Datenbankmitteln (104; 205) unter Berücksichtigung einer geographischen Position,
    - Programmmitteln (105; 215) zur Zusammenstellung der Informationen und der Werbung gemäß dem kundenindividuellen Verhältnis,
    - Programmmitteln (106; 213, 214) zum automatischen Layout der Informationen mit den zugeordneten Kennungen und der Werbung zur Erzeugung einer Druckdatei, basierend auf einer Formatinformation, die jeder Informations-Datei und jeder Werbungs-Datei zugeordnet ist, wobei die Formatinformation ein Format (1,2,3) aus einer vorgegebenen Format-Menge (500) identifiziert, mit einer Layout-Format-Datenbank (214) zur Speicherung einer Menge von Layouts basierend auf unterschiedlichen Formaten der Format Menge, und mit Mitteln (213) zur Zuordnung der zusammengestellten Informations-Dateien und Werbe-Dateien zu einer der Layouts basierend auf den Format-Informationen,
    - Programmmitteln zur Zuordnung von nicht kundenindividueller Werbung (205) zu durch die Zuordnung der Informations-Dateien und Werbungs-Dateien nicht abgedeckten Format-Felder in dem Layout,
    - Mitteln (604) zum Empfang einer Telekommunikations-Nachricht zur Anpassung des Interessenprofils über ein digitales Mobilfunknetz, wobei die Mittel zum Empfang der Telekommunikations-Nachricht so ausgebildet sind, dass der Kunde durch die Telefonnummer des Telekommunikationsgeräts identifiziert wird, von dem die Telekommunikations-Nachricht abgesendet worden ist und wobei die Mittel zum Empfang der Telekommunikations-Nachricht zum Empfang von geocodierten Daten ausgebildet sind, die die geographische Position eines Kunden-Lesegeräts (601) beinhalten und wobei die Telekommunikations-Nachricht ein oder mehrere mit dem Kunden-Lesegerät eingelesene Kennungen beinhaltet,

    und mit einem Mobiltelefon (603), das das Telekommunikationsgerät und das Kunden-Lesegerät integriert, wobei das Mobiltelefon über Ortungsmittel zur Ermittlung der geocodierten Daten verfügt.

**2.** System nach Anspruch 1 mit Mitteln (221) zur Eingabe eines kundenindividuellen Preises für das Druckerzeugnis (219) und mit Mitteln (215) zur Bestimmung des kundenindividuellen Verhältnisses von Informationen zu Werbung für den kundenindividuellen Preis mittels eines Programm-Moduls (215) zum Zugriff auf eine Ausgaben-Datenbank (206) zur Speicherung der prognostizierten Druckkosten für die Informationen und Werbung und einer Einnahmen-Datenbank (207) zur Speicherung der prognostizierten Einnahmen für den Druck von Werbung.

**3.** System nach Anspruch 1 oder 2, wobei es sich bei der Kennung um einen Barcode (602) handelt.

**4.** System nach einem der vorhergehenden Ansprüche 1 bis 3 mit Mitteln zur Gewichtung (210) eines kundenindividuellen Langfrist-Interessenprofils (211) und eines kundenindividuellen Kurzfrist-Interessenprofils (212) zur Erzeugung eines aktuellen kundenindividuellen Interessenprofils.

**5.** System nach einem der vorhergehenden Ansprüche , wobei die Ortungsmittel für eine GPS Ortung ausgebildet sind.

**6.** System nach einem der vorhergehenden Ansprüche, wobei die Ortungsmittel für eine COO Ortung ausgebildet sind.

**7.** Verfahren zur Herstellung eines kundenindividuellen Druckerzeugnis mit folgenden Schritten:

- Speicherung eines kundenindividuellen Interessenprofils,
- Festlegung eines kundenindividuellen Verhältnisses von Informationen zu Werbung,
- Auswahl von Informationen gemäß dem kundenindividuellen Interessenprofil aus ersten Datenbankmitteln unter Berücksichtigung einer geographischen Position, wobei jeder Informations-Datei eine Kennung zugeordnet ist,
- Auswahl von Werbung gemäß dem kundenindividuellen Interessenprofil aus zweiten Datenbankmitteln unter Berücksichtigung einer geographischen Position,
- Zusammenstellung der Informationen und der Werbung gemäß dem kundenindividuellen Verhältnis,
- automatisches Layout der Informationen mit der jeweils zugeordneten Kennung und der Werbung zur Erzeugung einer Druck-Datei, basierend auf einer Formatinformation, die jeder Informations-Datei und jeder Werbungs-Datei zugeordnet ist, wobei die Formatinformation ein Format aus einer vorgegebenen Format-Menge identifiziert, wobei die Zuordnung der zusammengestellten Informations-Dateien und Werbe-Dateien zu einem Layout einer Layout-Format-Datenbank, in der eine Menge von Layouts mit unterschiedlichen Formaten der Format-Menge gespeichert ist, basierend auf den Format-Informationen erfolgt,
- Zuordnung von nicht kundenindividueller Werbung (205) zu durch die Zuordnung der Informations-Dateien und Werbungs-Dateien nicht abgedeckten Format-Felder in dem Layout,
- Empfang einer Telekommunikations-Nachricht zur Anpassung des Interessenprofils über eine digitales Mobilfunknetz, wobei der Kunde durch die Telefonnummer des Mobiltelefons identifiziert wird, von dem die Telekommunikations-Nachricht abgesendet worden ist, und von geocodierten Daten, die die geografische Position eines Kunden-Lesegeräts beinhalten, und wobei die Telekommunikationsnachricht ein oder mehrere mit dem Kunden-Lesegerät eingelesene Kennungen beinhaltet, wobei das Kunden-Lesegerät in das Mobiltelefon (603) integriert ist, und wobei die Ermittlung der geocodierten Daten mit Hilfe des Mobiltelefons erfolgt,
- Anpassung des kundenindividuellen Interessenprofils basierend auf der oder den Kennungen der empfangenen dem Telekommunikations-Nachricht.

**8.** Verfahren nach Anspruch 7 mit folgenden weiteren Schritten:

- Zurverfügungstellung eines nicht kundenindividuellen Druckerzeugnisses mit einer jeder Information zugeordneten Kennung,
- Auswahl von einer oder mehreren der Informationen durch Lesen der entsprechenden Kennung bzw. der Kennungen mittels eines Kunden-Lesegeräts, durch Eingabe über eine Tastatur oder durch natürlich sprachliche Eingabe, und Erzeugung einer entsprechenden Telekommunikations-Nachricht zur Übertragung der Kennung oder der Kennungen,
- Speicherung der Kennungen der ausgewählten Information bzw. der ausgewählten Informationen,
- Erzeugung des kundenindividuellen Interessenprofils basierend auf der gespeicherten Kennung bzw. den gespeicherten Kennungen.

**Claims**

1. System for the production of a customer individualized print product with a computer system comprising

- first database means (101; 210, 211, 212) for saving of a customer individual profile of interest, whereby a customer-telephone number is assigned to each profile of interest,
- second database means (102; 206, 207, 208, 209, 212) for storing a customer individual ratio between information and advertisement in the print product,
- filter means (105, 215) for selection of information according to the customer individual profile of interest from a third database means (103; 204) taking into account a geographical position, whereby an identifier is assigned to every information file,
- filter means (105; 215) for selection of advertisement according to the customer individual profile of interest from forth database means (104; 205) taking into account a geographical position,
- program means (105; 215) for compilation of the information and the advertisement according to the customer specific ratio,
- program means (106; 213, 214) for the automated layout of information with the assigned identifier and of the advertisement for the generation of a print file, based on a format information, assigned to every information file and to every advertisement file, whereby the format information identifies a format (1, 2, 3) from a given set (500) of formats, and with a layout format database (214) for the saving of a set of layouts based on different formats of the format set, and with means (213) for the assignment of the compiled information files and advertisement files to one of the layouts based on the format information,
- programm means for the assignment of non-customer-specific advertisement (205) by the assigment of the information files and the advertisement files to non-covered format fields in the layout,
- means (604) for the reception of a telecommunication message for the adaptation of the profile of interest via a digital mobile radio network, whereby the means for reception of the telecommunication message are designed such that the customer is identified by the telephone number of the telecommunication device from which the telecommunications message had been sent, and whereby the means for the reception of a telecommunication message are adapted for receiving of geocoded data that contains the geographical position of a customer reading device (601), and whereby the telecommunication message contains one or more identifiers that have been read by the customer reading device,

and with a mobile phone (603) that integrates the telecommunication device and the customer reading device, wherein the mobile phone comprises positioning means for providing the geocoded data.

2. System according to claim 1 with means (221) for the entry of a customer individual price for the print product (219) and with means (215) for the determination of the customer individual ratio of information to advertisement for the customer individual price via a program module (215) for the access to an expenditure database (206) for storing the forecasted print costs for the information and advertisement and a revenue database (207) for storing the forecasted revenue for the print of advertisement.

3. System according to claim 1 or 2, wherein the identifier is a bar code (602).

4. System according to any one of claims 1 to 3, with weighing means (210) for weighing a customer individual long-term profile (211) and a customer individual short-term profile (212) for the generation of a current customer individual interest profile.

5. System according to any one of the preceding claims, the positioning means being adapted for GPS positioning.

6. System according to any one of the preceding claims, the positioning means being adapted for COO positioning.

7. A method for the production of a customer individual print product with the following steps:

- saving of a customer individual interest profile,
- fixing of a customer individual ratio of information to advertisement,
- selection of information according to a customer individual profile of interest from first database means taking into account of a geographical position, wherein every information file is assigned to an identifier,
- selection of advertisement according to a customer individual profile of interest from second database means taking into account of a geographical position,
- compilation of information and advertisement according to a customer individual ratio,
- automated layout of information with the assigned identifier and of the advertisement for the generation of a print file, based

on a format information, assigned to every information file and to every advertisement file, whereby the format information identifies a format from a given set of formats,and with a layout format database for the saving of a set of layouts based on different formats of the format set, and with means (213) for the assignment of the compiled information files and advertisement files to one of the layouts based on the format information,
- assignment of non-customer-specific advertisement (205) by the assigment of the information files and the advertisement files to non-covered format fields in the layout,
- reception of a telecommunication message for the adaptation of the profile of interest via a digital mobile radio network, whereby the customer is identified by the telephone number of the telecommunication device from which the telecommunications message had been sent, and of geocoded data that contain the geographical position of a customer reading device, and whereby the telecommunication message contains one or more identifiers that have been read by the customer reading device, and wherein the customer reading device is integrated into the mobile phone (603), wherein the geocoded data is acquired by the mobile phone,
- adapting of the customer individual interest profile based on the one or more identifiers of the received telecommunication message.

**8.** The method according to claim 7 with the following further steps;

- provision of a non customer individualized print product with an identifier allocated to every information.
- selection of one or several pieces of information by reading of the correspondent identifier respectively the identifiers via a customer reading device, by entry via keyboard or by natural voice entry and generation of a corresponding telecommunication message for the transmission of the identifier or the identifiers,
- storage of the identifiers of the selected piece of information respectively the selected pieces of information, and
- generation of the customer individual profile of interest, based on the saved identifier respectively the saved identifiers.

**Revendications**

**1.** Système d'obtention d'un produit imprimé individualisé pour le client présentant un système informatique comprenant :

- des premiers moyens de base de données (101 ; 210, 211 ,212) pour enregistrer un profil d'intérêts individualisé pour le client, un numéro de téléphone client étant attribué à chaque profil d'intérêts,
- des deuxièmes moyens de base de données (102 ; 206, 207, 208, 209, 212) pour enregistrer un rapport individualisé pour le client information/publicité dans le produit imprimé,
- des moyens de filtrage (105 ; 215) pour sélectionner des informations en fonction du profil d'intérêts individualisé pour le client à partir de troisièmes moyens de base de données (103 ; 204) en tenant compte d'une position géographique, un identificateur étant attribué à chaque fichier d'informations,
- des moyens de filtrage (105 ; 215) pour sélectionner des publicités en fonction du profil d'intérêts individualisé pour le client à partir de quatrièmes moyens de base de données (104 ; 205) en tenant compte d'une position géographique,
- des moyens de programmation (105 ; 215) pour assembler les informations et la publicité en fonction du rapport individualisé pour le client,
- des moyens de programmation (106 ; 213, 214) pour mettre en page automatiquement les informations avec les identificateurs attribués et la publicité afin de générer un fichier imprimé, sur la base d'une information de format, qui est attribuée à chaque fichier d'informations et chaque fichier de publicité, l'information de format identifiant un format (1, 2, 3) à partir d'un ensemble de format (500) donné, avec une base de données de format de mise en page (214) pour enregistrer un ensemble de mises en page sur la base de formats différents de l'ensemble de format, et avec des moyens (213) pour attribuer les fichiers d'informations et fichiers publicitaires assemblés à l'une des mises en page sur la base des informations de format,
- des moyens de programmation pour attribuer de la publicité non individualisée pour le client (205) à des champs de format non recouverts par l'attribution des fichiers d'informations et fichiers de publicité dans la mise en page,
- des moyens (604) pour recevoir un message de télécommunication destiné à adapter le profil d'intérêts par le biais d'un réseau mobile numérique, les moyens de réception du message de télécommunication étant conçus de telle sorte que le client est identifié par le numéro de téléphone du dispositif de télécommunication par lequel le message de télécommunication a été envoyé et les moyens de réception du message de télécommunication étant conçus pour la réception de données géocodées, lesquelles contiennent la position géographique d'un dispositif de lecture client (601) et le message de télécommunication contenant un ou plusieurs identificateurs lus avec le dispositif de lecture client,

et un téléphone mobile (603) qui intègre le dispositif de télécommunication et le dispositif de lecture client, le téléphone mobile disposant de moyens de localisation pour la détermination des données géocodées.

2. Système selon la revendication 1 présentant des moyens (221) de saisie d'un prix individualisé pour le client pour le produit imprimé (219) et présentant des moyens (215) de détermination du rapport individualisé pour le client informations/publicité pour le prix individualisé pour le client au moyen d'un module de programme (215) destiné à accéder à une base de données de dépenses (206) pour enregistrer les coûts d'impression prévus pour les informations et la publicité et une base de données d'encaissements (207) pour enregistrer les encaissements prévus pour l'impression de publicités.

3. Système selon la revendication 1 ou 2, dans lequel l'identificateur est un code-barres (602).

4. Système selon l'une des revendications précédentes 1 à 3 présentant des moyens d'évaluation (210) d'un profil d'intérêts à long terme individualisé pour le client (211) et d'un profil d'intérêts à court terme individualisé pour le client (212) pour la génération d'un profil d'intérêts actuel individualisé pour le client.

5. Système selon l'une des revendications précédentes, les moyens de localisation étant conçus pour une localisation GPS.

6. Système selon l'une des revendications précédentes, les moyens de localisation étant conçus pour une localisation COO.

7. Procédé d'obtention d'un produit imprimé individualisé pour le client présentant les étapes suivantes :

- enregistrement d'un profil d'intérêts individualisé pour le client,
- détermination d'un rapport individualisé pour le client informations/publicité,
- sélection d'informations selon le profil d'intérêts individualisé pour le client à partir de premiers moyens de base de données en tenant compte d'une position géographique, un identificateur étant attribué à chaque fichier d'informations,
- sélection de publicités selon le profil d'intérêts individualisé pour le client à partir de deuxièmes moyens de base de données en tenant compte d'une position géographique,
- assemblage des informations et de la publicité selon le rapport individualisé pour le client,
- mise en page automatique des informations avec l'identificateur attribué respectivement et de la publicité pour la génération d'un fichier imprimé, sur la base d'une information de format, qui est attribuée à chaque fichier d'informations et chaque fichier de publicité, l'information de format identifiant un format à partir d'un ensemble de format donné, l'attribution des fichiers d'informations et fichiers publicitaires assemblés a lieu selon une mise en page d'une base de données de format de mise en page, dans laquelle un ensemble de mises en page présentant différents formats de l'ensemble de format est enregistré, sur la base des informations de format,
- attribution de publicité non individualisée pour le client (205) à des champs de format, non recouverts par l'attribution des fichiers d'informations et fichiers de publicité, dans la mise en page,
- réception d'un message de télécommunication pour adapter le profil d'intérêts via un réseau mobile numérique, le client étant identifié par le numéro de téléphone du téléphone mobile, par lequel le message de télécommunication a été envoyé, et par des données géocodées qui contiennent la position géographique d'un dispositif de lecture client, et le message de télécommunication contenant un ou plusieurs identificateurs lus avec le dispositif de lecture client, le dispositif de lecture client étant intégré dans le téléphone mobile (603), et la détermination des données géocodées s'effectuant à l'aide du téléphone mobile,
- adaptation du profil d'intérêts individualisé pour le client sur la base de l'identificateur ou des identificateurs du message de télécommunication reçu.

8. Procédé selon la revendication 7 présentant les étapes supplémentaires suivantes :

- mise à disposition d'un produit imprimé non individualisé pour le client avec un identificateur attribué à chaque information,

- sélection d'une ou de plusieurs des informations par lecture de l'identificateur correspondant ou des identificateurs correspondants au moyen d'un dispositif de lecture client, par saisie sur un clavier ou par saisie vocale naturelle, et génération d'un message de télécommunication correspondant pour la transmission de l'identificateur ou des identificateurs,

- enregistrement des identificateurs de l'information sélectionnée ou des informations sélectionnées,

- génération du profil d'intérêts individualisé pour le client sur la base de l'identificateur enregistré ou des identificateurs enregistrés.

**Fig. 1**

**Fig. 2**

201 — Information
202 — Werbung
218 — Druckerei
200

203 — Einteilung in Kategorien
204 — Informations-datenbank
205 — Werbe-datenbank
206 — Ausgaben DB
214 — Layout Format DB
213 — Layout Auswahl
215 — Identifikation und Zusammenstellung
207 — Einnahmen DB
208 — Kostenrechnung
209 — Buchhaltungs DB
210 — Gewichtung
211 — Nutzerprofil DB
212 — Nutzerprofil DB

SERVER ENGINE

220 — Leser
219
217 — Übertragung
216 — Druck DB
221 — Registrierung
Rückkopplung

EP 1 573 611 B1

23

# Fig. 3A

| 5 | A | 1 | 0 | 2 | 0 | A | 7 | G | 2 | 7 |
|---|---|---|---|---|---|---|---|---|---|---|

Kategorie: 5 = Sport

Unter- Kategorie: A = Fußball

Größe / Format des Dokuments

Preis pro Kopie: 0,02 USD

Quelle US-Today

Datum: 7/27

# Fig. 3B

| 1 | 0 | 1 | 1 | 0 | 0 | 0 | 0 | 1 |
|---|---|---|---|---|---|---|---|---|

Kategorie: 5 = Sport

Unter- Kategorie: A = Fußball

Größe / Format des Dokuments

# Fig. 4

**Content Provider / Editor**

Content Data Base

201

EDI

401

200

**SERVER ENGINE**

SE kopiert Dokument Datei — 402

SE liest Datei; Vergleich mit Schlagwort DB — 403

Schlagwort DB — 400

SE bestimmt Anzahl Treffer pro Kategorie — 404

SE bestimmt Kategorie größter Trefferzahl — 405

SE ordnet Kategorie-kennung zu — 406

SE speichert Datei — 407

Informations-datenbank — 204

Fig. 5

## Fig. 6

## Fig. 7A

**FIG. 7 A**

Zugriff — 705 ⬡ 210 Nutzerprofil DB

Berechnung PCI — 706

Gewichtungsfunktion ⬡ 212 Nutzerprofil DB

**FIG. 7 C** — 707

**Fig. 7B**

**FIG. 7 B**

Identifizierung, Bildung Rangordnung — 708 ⬡ 204 Informationsdatenbank

Identifizierung, Bildung Rangordnung ⬡ Werbedatenbank

**FIG. 7 D** — 709 — 205

**Fig. 7C**

**FIG. 7 A**

— 710 ⬡ 209

COGS, Deckungs-beitrag, Preis

**FIG. 7 C** — Ausgaben / Einnahmen ⬡ 212

— 711

Festlegung der Auswahl — 712

**FIG. 7 E**

**Fig. 7D**

# Fig. 7E

FIG. 7 D

| | |
|---|---|
| Zusammenfassung von Rubriken | 713 |
| Layout templates | 714 |
| Offene Werbe-flächen | 715 |
| Kopier-instruktionen | 717 |

214

Layout Format DB

Allgemeine Werbedatenbank

716

FIG. 7 F

# Fig. 7F

719

Neue Datei

216

720

Druckauftrag an Druckerei

FIG. 7 E

Kopieren

718

204

Informationsdatenbank

205

Werbedatenbank

716

Allgemeine Werbedatenbank

214

Layout Format DB

**800** — Auswahl von Information und ggf. Werbung

**801** — Format Kette K = {F$_1$, F$_2$, ... F$_i$, ...}

**802** — i = 1

**803** — Bilde Unter- Format Kette U$_i$ = {F$_1$, F$_2$, ... F$_i$}

Menge L$_i$ von Layouts mit Layout- Codes = Permutation von U$_i$

**806**

**805**

**804**

i + 1 ⟵ nein — Ist die Menge L$_i$ leer ?

ja

**807** — Wähle Layout aus der Menge L$_{i-1}$, Ordne Werbung/ Information der Kette U$_{i-1}$ dem gewählten Layout zu

**808** — Bilde Differenzmenge K \ U$_{i-1}$ als neue Format- Kette K; i = 1

# Fig. 8

**IN DER BESCHREIBUNG AUFGEFÜHRTE DOKUMENTE**

**In der Beschreibung aufgeführte Patentdokumente**

- WO 0076204 A1
- GB 2357877 A
- US 5948061 A, Merriman
- US 5114291 A, Hefty
- US 5213461 A, Kalisher
- US 5765874 A
- WO 0060513 A, Moritz
- US 6085165 A, Ulwick
- US 6279013 B1
- WO 0075798 A1